# EUROPÄISCHE PATENTSCHRIFT

(11) **EP 1 390 564 B1**
(45) Veröffentlichungstag und Bekanntmachung des Hinweises auf die Patenterteilung: **11.02.2009**
(21) Anmeldenummer: 02702390.2
(22) Anmeldetag: 01.03.2002
(51) Int. Cl.: C23C 22/18, C23C 22/36, C23C 22/73

(54) **VERFAHREN ZUR BESCHICHTUNG VON METALLISCHEN OBERFLÄCHEN UND VERWENDUNG DER DERART BESCHICHTETEN SUBSTRATE**
METHOD FOR COATING METALLIC SURFACES AND USE OF THE SUBSTRATES COATED IN THIS MANNER
PROCEDE DE REVETEMENT DE SURFACES METALLIQUES ET UTILISATION DES SUBSTRATS AINSI REVETUS

(30) Priorität: 06.03.2001 DE 10110834
(43) Veröffentlichungstag der Anmeldung: 25.02.2004
(73) Patentinhaber: Chemetall GmbH, 60487 Frankfurt (DE)
(72) Erfinder: KOLBERG, Thomas, 64646 Heppenheim (DE); RENGNET-FERRIER, Séverine, Montreal, Québec H2L 3W1 (CA); BITTNER, Klaus, 60385 Frankfurt (DE); WENDEL, Thomas, 65824 Schwalbach (DE); WIETZORECK, Hardy, 65934 Frankfurt (DE); SCHÜLLERMANN, Gerrit, D-63477 Maintal (DE); SPECHT, Jürgen, 63110 Rodgau (DE)
(74) Vertreter: Hübner, Günter
(86) Internationale Anmeldenummer: PCT/EP2002/002290
(87) Internationale Veröffentlichungsnummer: WO 2002/070782

(56) Entgegenhaltungen:
- EP-A- 0 564 287
- WO-A-93/22474
- DE-A- 4 013 483
- DE-A- 4 210 513
- DE-A- 19 500 562
- PATENT ABSTRACTS OF JAPAN vol. 1995, no. 02, 31. März 1995 (1995-03-31) -& JP 06 330341 A (NIPPON PAINT CO LTD), 29. November 1994 (1994-11-29)
- WIMMER W ET AL: "Nickel- and Nitrite-Free Pretreatment of Car Bodies" METAL FINISHING, ELSEVIER SCIENCE PUBLISHING, NEW YORK, NY, US, Bd. 96, Nr. 5, 1. Mai 1998 (1998-05-01), Seiten 16,18-19, XP004118298 ISSN: 0026-0576

## Beschreibung

Die Erfindung betrifft ein Verfahren zur Beschichtung von metallischen Oberflächen sowie die Verwendung der nach dem erfindungsgemäßen Verfahren beschichteten Substrate mit metallischen Oberflächen. Dieses Verfahren soll als Vorbehandlung vor einer weiteren Beschichtung, insbesondere Lackierung, oder als Behandlung ohne nachfolgende Beschichtung dienen.

Bei der Zinkphosphatierung auf verzinkten Substraten und bei der anschließenden Lackierung, insbesondere mit kathodischem Tauchlack, treten immer wieder Lackhaftungsprobleme auf, bei dem der gesamte Lackaufbau an vielen kleinen oder sogar in größeren Partien enthaftet werden kann und der Lack mühelos abzogen werden kann. Bei einem Gitterschnitt-Test kann die totale Enthaftung bei einem Teil der Testkörper nachgewiesen werden. Die Enthaftung findet dabei üblicherweise zwischen der verzinkten Oberfläche und der Phosphatschicht mit dem Lackaufbau statt.

In der Vergangenheit wurden diese Probleme großtechnisch dadurch umgangen, daß der Phosphatierungslösung Nickel zugesetzt wurde, so daß diese meistens Nickel-Gehalte im Bereich von 0,5 bis 1,5 g/L aufwies. Bei der Zink-Mangan-Nickel-Phosphatierung wurden dabei meist Zink-Gehalte im Bereich von 0,6 bis 2 g/L und Mangan-Gehalte im Bereich von 0,4 bis 1 g/L gewählt, wobei der Zink-Gehalt üblicherweise höher ist als der Mangan-Gehalt.

Aufgrund der Giftigkeit und der Unverträglichkeit mit der Umwelt sind erhöhte Nickel-Gehalte in der Phosphatierungslösung, die zu unvermeidbaren hohen Schwermetall-Gehalten im Abwasser, im Phosphatschlamm und im Schleifstaub führen, immer weniger vertretbar. Es gibt daher etliche Ansätze, mit Nickel-freien oder zumindest Nickel-ärmeren Phosphatierungslösungen zu arbeiten. Diese Phosphatierungslösungen haben sich bisher jedoch noch nicht in weitem Ausmaß durchgesetzt, sondern zeigen bisher immer noch deutliche Nachteile im Vergleich zu den Nickel-reichen Phosphatierverfahren. Wenn bisher weitgehend frei von Nickel in der Automobilindustrie phosphatiert wurde, ergaben sich Probleme mit einer schwankenden Lackhaftung, so daß diese Versuche nicht weitergeführt wurden.

Das Vorphosphatieren wird bisher für verzinktes Stahlband eingesetzt. Unter Vorphosphatieren wird heute üblicherweise ein Phosphatierverfahren verstanden, bei dem metallische Substrate entweder ohne vorhergehende Reinigung direkt nach der Verzinkung oder mit einer vorhergehenden Reinigung, wenn keine Verzinkung oder eine Lagerung von ggfs. beölten Substraten gewählt wird und anschließend noch einmal phosphatiert wird. Zwischen dem Vorphosphatieren und dem zweiten Phosphatieren (=Nachphosphatieren) kann ein Schneiden bzw. Bearbeiten der Substrate, ein Umformen, ein Verkleben mit anderen Teilen, die ggfs. auch vorphosphatiert wurden, oder/und ein Schweißen der Substrate erfolgen. Nach Kenntnis der Anmelderin sind jedoch bisher keine Vorphosphatierverfahren bekannt, bei denen ohne deutliche Qualitätsverluste weitgehend oder gänzlich frei von Nickel gearbeitet werden kann.

DE-A1-40 13 483 beschreibt ein Verfahren zur Phosphatierung von Metalloberflächen mit wässerigen, sauren Phosphatierungslösungen, die Zink, Mangan, Kupfer, Phosphat und Oxidationsmittel sowie nur Spuren von Nickel enthalten, wobei die Konzentration an Fe²⁺-Ionen unter 0,1 g/L gehalten werden soll. In den Beispielen werden Kupfer-Gehalte im Bereich von 3 bis 5 mg/L angeführt. Ernsthafte Probleme können jedoch mit den dort genannten Phosphatierungslösungen auf verzinkten Oberflächen auftreten, während die Qualität der Trikation-Verfahren auf Basis Nickel-reicher Zn-Mn-Ni-Phosphatierung erreicht wird.

DE-A1-42 10 513 behandelt ein Verfahren zur Erzeugung von kupferhaltigen, nickelfreien Phosphatschichten durch Spritzen oder/und Tauchen mit einer Phosphatierungslösung, die 0,2 bis 2 g/L Zink, 5 bis 30 g/L P₂O₅, 0,005 bis 0,025 g/L Kupfer und 0,5 bis 5 g/L einer Verbindung auf Basis Hydroxylamin, berechnet als HA, aufweist , durch die Phosphatkristalle mit einer Kantenlänge im Bereich von 0,5 bis 10 µm erzeugt werden. Dadurch sollen porenarme, dichte Phosphatschichten mit einem geringen Flächengewicht, hervorragender Korrosionsbeständigkeit und sehr guter Lackhaftung erzeugt werden. Alle kupferhaltigen Ausführungsbeispiele zeigen entweder ein Zn : Mn -Verhältnis > 1 oder einen hohen Nickel-Gehalt.

EP-A-0 675 972 beschreibt ein Verfahren zur Erzeugung von kupferhaltigen, weitgehend nickelfreien Zinkphosphatschichten mit einer wässerigen Zusammensetzung sowie die wässerige Zusammensetzung, die 0,026 bis 0,074 g/L Kupfer, die 0,45 bis 2 g/L Zink, 0,1 bis 10 g/L von Verbindungen auf Basis Hydroxylamin, berechnet als HA, Werte der Gesamtsäure im Bereich von 5 bis 40 Punkten sowie der freien Säure im Bereich von -0,5 bis +0,8 Punkten aufweist und die vorzugsweise Gesamtgehalte von bis zu 2 g/L von Mangan und Kobalt enthalten kann. Hierdurch sollen umweltfreundlichere und kostengünstigere als die konventionellen nickelhaltigen Phosphatierungsverfahren genutzt und Beschichtungen der gleichen Qualität wie die durch konventionelles ZnMnNi-Phosphatieren erzeugten Beschichtungen gewonnen werden. Alle kupferhaltigen Ausführungsbeispiele zeigen entweder ein Zn : Mn -Verhältnis > 1 oder gar keinen Mangan-Gehalt.

DE-A1-196 06 017 regt ein Verfahren zur Phosphatierung von Metalloberflächen mit wässerigen, sauren Phosphatierungslösungen, die gewisse Gehalte an Zink, aber nur Spuren von Mangan und Kupfer neben Phosphat und mindestens einem Beschleuniger sowie möglichst nur Spuren von Nickel an. Mit diesem Verfahren können keine wässerigen Zusammensetzungen mit einem Zn : Mn -Verhältnis < 1 genutzt werden.

DE- A1-196 34 685 lehrt eine wässerige Lösung zur Erzeugung von Phosphatschichten sowie das zugehörige Verfahren zur Phosphatierung, bei dem die Phosphatierungslösung mit Zink, mit Phosphat, mit Nitroguanidin als Beschleuniger und mit weitere Zusätzen so eingestellt ist, daß Phosphatkristallite mit einer maximalen Kantenlänge < 15 µm bei vergleichsweise niedrigen Temperaturen erzeugt werden sollen und daß ein niedriges Schichtgewicht und eine gute Lackhaftung erzielt werden sollen. Alle kupferhaltigen Ausführungsbeispiele zeigen ein Zn : Mn -Verhältnis > 1 oder bei einem Zn : Mn -Verhältnis < 1 nur Kupfer-Gehalte bis 0,005 g/L. Nitroguanidin ist jedoch als Beschleuniger oft nachteilig, weil beim längeren Gebrauch des Phosphatierungsbades - u.U. schon nach einem Tag - in Gegenwart von Kupfer-Gehalten ein Badgift gebildet wird, das die Schichtausbildung auf Stahl-Oberflächen stark beeinträchtigt: Notfalls ist das Bad dann abzulassen und neu anzusetzen.

DE-A1-195 00 562 betrifft Phosphatierungslösungen, die 0,2 bis 3 g/L Zink, 0,001 bis 0,2 g/L Silber und Phopshat enthalten. Die meisten Beispiele sind auf ManganZink-Phosphatierungen gerichtet.

Bei den heute gebräuchlichen Mangan-Zink-Phosphatierungsverfahren werden üblicherweise Gehalte an Zink zu Mangan im Verhältnis etwa um 1,3 : 1 bis 3 : 1 eingesetzt werden. Es wurde jetzt überraschend festgestellt, daß die Lackhaftung deutlich verbessert wurde, wenn das Gewichtsverhältnis Zink zu Mangan weniger als 1 : 1 betrug.

Aufgabe der Erfindung ist es daher, die Nachteile des Standes der Technik bei einem Nickel-Zusatz-freien Phosphatierungssystem und auch die ernsthaften Lackenthaftungsprobleme insbesondere auf verzinkten bzw. Zink-Oberflächen zu überwinden. Insbesondere soll ein Verfahren zur Beschichtung von verzinkten Oberflächen bereitgestellt werden, das möglichst sowohl für die Einzelteil-, als auch für die Bandbeschichtung bei hohen Geschwindigkeiten industriell geeignet ist. Das Phosphatierungsverfahren soll den heute angewandten Phosphatierungssystemen zur Vorbehandlung bzw. Behandlung bezüglich der Korrosionsbeständigkeit mindestens gleichwertig sein, aber auch kostengünstig und umweltfreundlich, insbesondere weitestgehend Nickel-frei, eingesetzt werden können. Insbesondere bestand die Aufgabe, ein industriell einsetzbares, weitgehend Nickel-freies Phosphatierverfahren zum Vorphosphatieren vorzuschlagen.

Die Aufgabe wird gelöst durch ein Verfahren zur Beschichtung von metallischen Oberflächen durch Mangan-Zink-Phosphatieren mit einer ersten wässerigen Phosphatierungslösung (Vorphosphatieren), bei dem der ersten Phosphatierungslösung kein Nickel absichtlich zugesetzt wird, das dadurch gekennzeichnet, daß sie folgende Gehalte aufweist.
Zink im Bereich von 1,3 bis 2,3 g/L,
Mangan im Bereich von 1,7 bis 2,6 g/L,
Zink : Mangan - Gewichtsverhältnis im Bereich von 0,5 : 1 bis 0,95 : 1,
Phosphat berechnet als PO₄ im Bereich von 10 bis 20 g/L,
Zink : Phosphat - Gewichtsverhältnis im Bereich von 0,06 bis 0,23,
Kupfer im Bereich von 0,008 bis 0,048 g/L,
Gesamtgehalt an Fluorid als freies Fluorid, als gebundenes Fluorid oder/und als wenigstens ein Komplexfluorid im Bereich von 0 bis 6 g/L, berechnet als F, wobei das Komplexfluorid SiF₆ einen Gehalt im Bereich von 0 bis 4,5 g/L aufweist, berechnet als SiF₆, und
Nitrat im Bereich von 0 bis zu 30 g/L oder/und
wenigstens einen anderen Beschleuniger ausgewählt aus der Gruppe von Nitrit bzw. Verbindungen auf Basis von Hydroxylamin oder/und Nitroguanidin im Bereich jeweils von 0,01 bis 2 g/L bzw. von Peroxid im Bereich von 0,01 bis 3 g/L,
daß die vorphosphatierten Substrate geschweißt, verklebt oder/und umgeformt werden und
daß diese danach erneut phosphatiert werden (Nachphosphatieren), wobei zumindest teilweise vorphosphatierte, ggfs. zumindest teilweise umgeformte, ggfs. zumindest teilweise geschweißte metallische Substrate nachphosphatiert werden durch Beschichten mit einer zweiten wässerigen Phosphatierungslösung,
wobei der zweiten Phosphatierungslösung kein Nickel absichtlich zugesetzt wird oder nur mit einem Nickel-Gehalt von bis zu 0,3 g/L gearbeitet wird,
wobei die zweite Phosphatierungslösung folgende Gehalte aufweist:
Zink im Bereich von 0,05 bis 5 g/L und
Mangan im Bereich von 0,075 bis 5,2 g/L.

Es wurde überraschend festgestellt, daß bei Nickel-Zusatz-freien Phosphatierungslösungen bei einem Zn : Mn -Verhältnis von kleiner als 1 : 1 signifikant bessere Beschichtungsergebnisse erzielt werden können, ohne daß die sonst beschriebenen Probleme mangelnder Lackhaftung auftreten. Vorzugsweise liegt das Zink : Mangan - Gewichtsverhältnis der Phosphatierungslösung im Bereich von 0,5 : 1 bis 0,9 : 1, insbesondere im Bereich von 0,65 : 1 bis 0,8 : 1. Überraschenderweise ist die Beschichtung über einen sehr weiten Bereich der Zink : Mangan - Gewichtsverhältnisse der Phosphatierungslösung hochwertig. Wenn jedoch in sehr sauren Lösungen der Zink-Gehalt unter 0,2 g/L sinkt, kann auf Eisen-reichen Oberflächen auch die Beschichtungsqualität absinken.

Die Phosphatierungslösung weist vorzugsweise Zink-Gehalte auf im Bereich von 0,5 bis 3,8 g/L, für Band insbesonders im Bereich von 1,6 bis 3,5 g/L und für Teile insbesonders im Bereich von 0,6 bis 2 g/L und besonders bevorzugt im Bereich von 0,8 bis 1,1 g/L. Beim Phosphatieren durch Besprühen von Teilen genügt oft ein Zink-Gehalt im Bereich von 0,3 bis 1,3 g/L, während beim Tauchen oft Zink-Gehalte im Bereich von 0,7 bis 1,9 g/L erforderlich sind. Für das Vorphosphatieren liegt der Zink-Gehalt vorzugsweise im Bereich von 1,1 bis 3,5 g/L. Wenn der Zink-Gehalt der Phosphatierungslösung zu gering ist, dann ist die Schichtausbildung insbesondere auf Eisen-reichen Oberflächen unvollständig. Bei Zink-Gehalten kleiner 0,4 g/L kann u.U. bei Teilen insbesondere auf Eisen-reichen Oberflächen nicht mehr mit guten Beschichtungsergebnissen gerechnet werden. Bei Zink-Gehalten größer 2,5 g/L kann die Lackhaftung bereits leicht abnehmen, wenn auch die Mangan-Gehalte nur im Bereich von etwa 2,55 bis 2,8 g/L liegen. Je kleiner das Zink : Mangan-Gewichtsverhältnis ist, desto stärker wird dieser Effekt gebremst, so daß bei Zink-Gehalten größer 3,5 g/L die Lackhaftung nur bei Mangan-Gehalten im Bereich von etwa 3,55 bis 3,8 g/L ein wenig abnimmt.

Der Begriff "Zink-Oberflächen" im Sinne dieser Erfindung umfaßt nicht nur die Oberflächen von Zink-Legierungen, sondern auch die verzinkten Oberflächen, insbesondere solche von Eisen-Legierungen bzw. Stahl. Entsprechend umfassen die Begriffe "Aluminium-Oberflächen" die Oberflächen von Aluminium und AluminiumLegierungen bzw. "Eisen-Oberflächen" die Oberflächen von Eisen-reichen Legierungen.

Vorzugsweise liegt der Mangan-Gehalt der Phosphatierungslösung im Bereich von 0,2 bis 4 g/L, für Band insbesondere im Bereich von 1,7 bis 3,0 g/L, für Teile insbesondere im Bereich von 0,5 bis 3,8 g/L und besonders bevorzugt im Bereich von 1 bis 3 g/L. Durch einen erhöhten Mangan-Gehalt wird eine deutliche Verbesserung der Lackhaftung auf den phosphatierten Oberflächen erzielt. Für das Vorphosphatieren liegt der Mangan-Gehalt vorzugsweise im Bereich von 1,9 bis 2,4 g/L.

Der Kupfer-Gehalt liegt vorzugsweise im Bereich von 0,009 bis 0,045 g/L, besonders bevorzugt im Bereich von 0,010 bis 0,040 g/L und für Band insbesonders im Bereich von 0,012 bis 0,25 g/L, für Teile insbesonders im Bereich von 0,012 bis 0,030 g/L. Für das Vorphosphatieren liegt der Kupfer-Gehalt vorzugsweise im Bereich von 0,008 bis 0,048 g/L, besonders bevorzugt im Bereich von 0,017 bis 0,043 g/L. Bei den Versuchen zum Vorphosphatieren zeigte sich, daß die Ergebnisse bezüglich Korrosionsschutz und bezüglich der Lackhaftung beim BMW-Lackaufbau kontinuierlich besser wurden von den schlechten Ergebnissen mit kupferfreien Phosphatierungslösungen bis zu guten Ergebnissen ab 0,017 g/L; es zeigte sich aber auch, daß sich diese Ergebnisse oberhalb etwa 0,040 bis 0,043 g/L Kupfer wieder verschlechtern können.

In der erzeugten Phosphatbeschichtung ergab sich ein Kupfergehalt, der meistens im Bereich von 5 bis 35 mg/m² liegt. Durch den Zusatz geringer Mengen an Kupfer können bessere Beschichtungsergebnisse und Lackhaftungswerte als ohne Kupferzusatz und auch als mit sehr geringen Zusätzen erzielt werden. Durch den Kupferzusatz wird insbesonders die Korrosionsbeständigkeit einer Eisen-Oberfläche verbessert. Kupfer-Gehalte im Bereich von 0,020 bis 0,050 g/L führen nicht zu schlechteren Schichten; allerdings kann bei höheren Kupfer-Gehalten in Verbindung mit einer überlangen Verweilzeit der Substrate in den Bädern eine ungleichmäßige Kupferabscheidung auf den zu phosphatierenden Oberflächen auftreten.

Durch den Zusatz kleiner Mengen an Hexafluorid von Titan, Hafnium oder/und Zirkonium kann die Lackhaftung signifikant verbessert werden. Diese Gehalte liegen vorzugsweise im Bereich von 0,003 bis 0,3 g/L, besonders bevorzugt im Bereich von 0,004 bis 0,1 g/L. Allerdings sind bei Aluminium-Oberflächen diese Hexafluoride meistens auf Werte von bis zu 0,05 g/L - berechnet als F₆ - zu begrenzen, da sonst eine stark gestörte Schichtausbildung auftreten kann. Zusätzlich kann ein Gehalt an Siliciumhexafluorid insbesonders im Bereich von 0,5 bis 4 g/L SiF₆ vorteilhaft sein, vorzugsweise im Bereich von 1 bis 3 g/L, um die Homogenität der Phosphatschicht vor allem bei Zink-Oberflächen zu verbessern und um das Bad bei Anwesenheit von freiem Fluorid bezüglich der Zinkausfällung zu stabilisieren und dadurch die Zink-Gehalte im Bad gelöst zu halten.

Vorzugsweise ist die Phosphatierungslösung frei von Zusätzen an Oxo-Anionen von Halogenen, insbesondere an Nickel und an Aluminium-Gehalten größer als 0,05 g/L. Auch wenn kein Nickel der Phosphatierungslösung absichtlich zugegeben wird, kann aufgrund des Nickel-Gehalts. der metallischen Oberfläche des zu beschichtenden Substrats, aufgrund der evtl. Nickel enthaltenden Behältermaterialien und untergeordnet aufgrund von Spurenverunreinigungen in den Zusätzen ein Nickel-Gehalt im Bad von bis zu 0,1 g/L, in extremen Fällen aufgrund sehr Nickel-reicher metallischer Oberflächen sogar von bis zu 0,25 g/L auftreten.

Während bei der häufig eingesetzten Nickel-haltigen Phosphatierung vielfach 1 bis 2 g/L Nickel in der Phosphatierung verwendet werden, ist es bei der erfindungsgemäßen Kupfer-haltigen und weitestgehend oder gänzlich Nickel-freien Phosphatierung möglich, mit 0,008 bis 0,050 g/L Kupfer auszukommen. Während bei den genannten Nickel-Gehalten im Bad etwa 10 bis 20 mg/m² Nickel und 0,7 bis 1,3 Gew.-% Nickel in der Phosphatbeschichtung enthalten sind, finden sich trotz der viel geringeren Kupfer-Gehalte in der Phosphatierungslösung etwa 5 bis 35 mg/m² Kupfer und 0,3 bis 2 Gew.-% Kupfer in der erfindungsgemäßen Phosphatbeschichtung.

Das erfindungsgemäße Beschichtungsverfahren kann sich dadurch auszeichnen, daß die Phosphatierungslösung einen Gehalt an Silber im Bereich von 0,0001 bis 0,05 g/L aufweist, vorzugsweise im Bereich von 0,001 bis 0,03 g/L.

Darüber hinaus kann die Phosphatierungslösung auch Gehalte an Fe²⁺-Ionen im Bereich von etwa bis zu 1 g/L enthalten, insbesondere bei Eisen-Oberflächen. Weder geringe, noch erhöhte Fe²⁺-Gehalte im Phosphatierungsbad stören normalerweise bei den verschiedensten Metalloberflächen.

Bei dem erfindungsgemäßen Beschichtungsverfahren kann die Phosphatierungslösung einen Gehalt an Natrium im Bereich von 0,01 bis 10 g/L oder/und einen Gehalt an Kalium im Bereich von 0,01 bis 10 g/L aufweisen, vorzugsweise einen Gehalt an Natrium im Bereich von 1 bis 5 g/L, ganz besonders bevorzugt im Bereich von 3 bis 4 g/L. Üblicherweise ist die Zugabe von Natrium vorteilhaft, um die Gehalte an Freier Säure abzusenken. Außerdem kann die Natrium-Zugabe helfen, einen Teil des Aluminium-Gehalts in der Phosphatierungslösung, die u.U. die Schichtausbildung auf Stahl bzw. u.U. auch die Lackhaftung beeinträchtigen können, z.B. als Kryolith auszufällen. Im Vergleich zu Natrium ist Kalium nicht nur wegen der etwas höheren Kosten, sondern auch wegen u.U. schlechterer Beschichtungseigenschaften weniger empfehlenswert.

Bei dem erfindungsgemäßen Beschichtungsverfahren kann das Zink : Phosphat - Gewichtsverhältnis der Phosphatierungslösung im Bereich von 0,016 : 1 bis 1,33 : 1 gehalten werden, wobei Phosphat als PO₄ berechnet wird. Vorzugsweise wird dieses Verhältnis im Bereich von 0,02 : 1 bis 0,8 : 1, besonders bevorzugt im Bereich von 0,025 : 1 bis 0,25 : 1 gehalten.

Bei dem erfindungsgemäßen Beschichtungsverfahren kann die Phosphatierungslösung einen Gehalt an Phosphat im Bereich von 3 bis 75 g/L aufweisen, wobei Phosphat als PO₄ berechnet wird, vorzugsweise im Bereich von 7,5 bis 37 g/L, besonders bevorzugt im Bereich von 10 bis 30 g/L, ganz besonders bevorzugt im Bereich von 12 bis 26 g/L, bei Band insbesonders bei 17 bis 21 g/L. Für das Vorphosphatieren liegt der Phosphat-Gehalt vorzugsweise im Bereich von 12 bis 18 g/L. Wenn das Gewichtsverhältnis (Zink + Mangan) : Phosphat zu hoch ist, dann kann das Bad zur Instabilität neigen, wenn nicht die freie Säure angehoben ist, und es kann sonst eine stärkere Ausfällung von Phosphaten auftreten. Wenn dieses Gewichtsverhältnis zu niedrig ist, dann können sich die Korrosionsbeständigkeit und die Lackhaftung verschlechtern.

Bei dem erfindungsgemäßen Beschichtungsverfahren kann die Phosphatierungslösung einen Gehalt an Chlorid im Bereich von 0,01 bis 10 g/L oder/und einen Gehalt an Chlorat im Bereich von 0,01 bis 5 g/L aufweisen, vorzugsweise von Chlorid im Bereich von 0,1 bis 6 g/L, vorzugsweise von Chlorat im Bereich von 0,1 bis 3 g/L. Eine Zugabe von Chlorid und ggfs. auch von Chlorat oder nur von Chlorat in gewissen Mengen sollte bei der Phosphatierung von Zink-Oberflächen wegen der Gefahr der Bildung von weißen Flecken (Stippen) vermieden werden, wenn Nitrat oder/und Nitrit anwesend sind.

Da Aluminium-Gehalte aus Aluminium- bzw. Aluminium-Zink-Oberflächen ohne Gegenwart von Fluorid-Gehalten problematisch sein können, ist es vorteilhaft, dann freies Fluorid - z.B. als HF oder als Natriumbifluorid - oder/und Siliciumhexafluorid zuzusetzen. Siliciumhexafluorid kann die Phosphatierungslösung stabilisieren, d.h. die Ausfällung von Phosphaten verringern, und kann außerdem bei Zink-Oberflächen die Stippenbildung vermindern.

Bei dem erfindungsgemäßen Beschichtungsverfahren kann die Phosphatierungslösung einen Gehalt an freiem Fluorid im Bereich von 0,001 bis 0,8 g/L aufweisen, vorzugsweise im Bereich von 0,01 bis 0,5 g/L, besonders bevorzugt im Bereich von 0,03 bis 0,2 g/L, berechnet als F. Ein Gehalt an freiem Fluorid kann förderlich sein für die Phosphatierung von Aluminium-Oberflächen und für die Ausfällung von Aluminium. Typischerweise liegen etwa 1 bis 60 % des gesamten Fluor-Gehaltes als freies Fluorid vor und die übrigen Anteile als Komplexfluorid und als undissoziierte Flußsäure.

Bei dem erfindungsgemäßen Beschichtungsverfahren kann die Phosphatierungslösung einen Gehalt am gesamten Fluorid im Bereich von 0,01 bis 5 g/L aufweisen, vorzugsweise im Bereich von 0,1 bis 1 g/L, berechnet als F.

Bei dem erfindungsgemäßen Beschichtungsverfahren kann die Phosphatierungslösung einen Gehalt an mindestens einem Beschleuniger im Bereich von 0 bis 40 g/L aufweisen, vorzugsweise im Bereich von 0,02 bis 30 g/L, besonders bevorzugt im Bereich von 0,1 bis 20 g/L. Der Beschleuniger kann helfen, die Bildung von Wasserstoffbläschen an den Oberflächen zu unterbinden. Durch den besseren Kontakt zur zu beschichtenden Oberfläche - weil diese nicht durch Wasserstoffbläschen partiell abgedeckt ist - können dort mehr Kristallkeime ausgebildet werden. Insbesonders bei Zink-Oberflächen ist die Gegenwart eines Beschleunigers nicht zwingend erforderlich. Ein Beschleuniger ist aber meistens bei Aluminium-, Eisen- und Stahl-Oberflächen von deutlichem Vorteil, weil dadurch die Phosphatschicht feinkristalliner ausgebildet werden kann, weil die Phosphatschicht dadurch schneller und leichter geschlossen werden kann und weil der Korrosionsschutz und die Lackhaftung dadurch verbessert werden können.

Bei dem erfindungsgemäßen Beschichtungsverfahren kann die Phosphatierungslösung einen Gehalt an Nitrit im Bereich von 0,01 bis 0,3 g/L, einen Gehalt an Nitrat im Bereich von 1 bis 30 g/L, einen Gehalt an Verbindungen auf Basis Peroxid im Bereich von 0,001 bis 3 g/L, vorzugsweise im Bereich von 0,01 bis 0,15 g/L, berechnet als H₂O₂, einen Gehalt an Nitrobenzolsulfonat (NBS), Nitropropan, Nitroethan oder/und anderen nitroorganischen Verbindungen mit oxidierenden Eigenschaften - mit Ausnahme von Verbindungen auf Basis Nitroguanidin - mit einem Gesamtgehalt im Bereich von 0,1 bis 3 g/L, berechnet als NO₂, einen Gehalt an Verbindungen auf Basis Nitroguanidin im Bereich von 0,1 bis 5 g/L, einen Gehalt an Chlorat vorzugsweise im Bereich von 0,05 bis 4 g/L, einen Gehalt an reduzierenden Zuckerverbindungen im Bereich von 0,1 bis 10 g/L oder/und einen Gehalt an Verbindungen auf Basis Hydroxylamin (HA) im Bereich von 0,1 bis 6 g/L aufweist, berechnet als HA. Chlorat-Zusätze werden üblicherweise in Nitrit- und Nitrat-freien Bädern verwendet, wenn Zink-Oberflächen beschichtet werden sollen. Für das Vorphosphatieren liegt der Nitrat-Gehalt vorzugsweise im Bereich von 12 bis 19 g/L.

Wenn beim Vorphosphatieren mit geringen Nitrat-Gehalten oder sogar Nitrat-frei gearbeitet wird, ist ein Zusatz von 0,5 bis 3 g/L an Peroxid, berechnet als H₂O₂, bevorzugt.

Vorzugsweise hat die Phosphatierungslösung einen Gehalt an Nitrit im Bereich von 0,05 bis 0,2 g/L. Während Nitrit den Nachteil hat, ebenso wie die evtl. daraus entstehenden nitrosen Gase recht giftig zu sein, hat Nitrit den Vorteil, preiswert und in seiner Wirkung sehr bekannt und kontrollierbar wirkend zu sein. Vorzugsweise hat die Phosphatierungslösung einen Gehalt an Nitrat im Bereich von 5 bis 25 g/L. Aufgrund der schwachen Wirkung dieses Beschleunigers werden oft höhere Gehalte an Nitrat eingesetzt. Vorzugsweise hat die Phosphatierungslösung einen Gehalt an Verbindungen auf Basis Peroxid im Bereich von 0,01 bis 0,1 g/L. Vorzugsweise hat die Phosphatierungslösung einen Gehalt an Nitrobenzolsulfonat oder/und anderen nitroorganischen Verbindungen mit oxidierenden Eigenschaften insgesamt im Bereich von 0,5 bis 2 g/L. Vorzugsweise hat die Phosphatierungslösung einen Gehalt an Verbindungen auf Basis Hydroxylamin im Bereich von 0,5 bis 2 g/L. Vorzugsweise liegt der Gehalt an Verbindungen auf Basis Hydroxylamin, berechnet als HA, zur Summe an Zink und Mangan in der Phosphatierungslösung im Bereich von 1 : 2 bis 1 : 4. Hydroxylamin kann jedoch u.U. in Gegenwart eines gewissen Kupfer-Gehalts katalytisch zersetzt werden.

Vorteilhafterweise kann mindestens eine Verbindung auf Basis von Perborsäure, Milchsäure, Weinsäure, Zitronensäure oder/und einer chemisch verwandten Hydroxycarbonsäure zugegeben werden, um das Bad bzw. das Konzentrat bzw. die Ergänzungslösung zu stabilisieren, insbesondere um Ausscheidungen aus einer dieser Lösungen zu vermeiden bzw. zu verringern sowie um die Kristallinität der Phosphatschicht zu steigern, wodurch die Wasserfestigkeit der Phosphatschicht deutlich verbessert wird.

Andererseits kann auch ein Zusatz eines polymeren Alkohols vorteilhaft sein, um mit diesem Alkohol Phosphorsäureester insbesondere bei der Trocknung Phosphorsäureester auszubilden, die sich als Schmierstoffe beim Umformen förderlich auswirken. Gleichzeitig kann sich der Zusatz eines polymeren Alkohols auf die Reaktion mit der ggfs. vorhandenen überschüssigen freien Phosphorsäure in der Phosphatierlösung aus, um die Kristallinität und die Wasserfestigkeit der Phosphatbeschichtung zu verbessern.

Überraschend wurde festgestellt, daß das Vorphosphatieren unter Verwendung von kupferhaltigen Phosphatierungslösungen mit einem Zn : Mn - Gewichtsverhältnis von kleiner 1 : 1 dazu führt, daß die Lackhaftungsergebnisse insbesondere auf verzinkter Oberfläche außergewöhnlich gut sind, wenn nach dem Vorphosphatieren und vor dem Lackieren gänzlich oder weitgehend Nickel-frei nachphosphatiert wurde. Außerdem wurde überraschend festgestellt, daß durch die weitgehende Vermeidung des Nickel-Gehaltes die guten Eigenschaften einer Nickel-haltigen Vorphosphatierungsschicht bezüglich Korrosionsschutz, Umformbarkeit, Verklebbarkeit und Schweißbarkeit erhalten bleiben, im Falle der Verformbarkeit jedoch sogar zu noch besseren Ergebnissen führen. Die Vorphosphatierung eignet sich insbesondere zum Aufbringen einer rinse-Phosphatierung durch Spritzen oder/und Tauchen bei Spritz-/Tauchzeiten etwa im Bereich von 3 bis 15 Sekunden und bei einer Temperatur im Bereich von 45 bis 65 °C, vor allem bei verzinkten Oberflächen.

Das Vorphosphatieren eignet sich insbesondere bei der Bandherstellung durch rinse-Verfahren, bei denen nach dem Aufbringen der Phosphatschicht gespült wird. Dieses Verfahren eignet sich vor allem für die Automobilproduktion.

Bei dem erfindungsgemäßen Beschichtungsverfahren kann die Phosphatierungslösung zum Vorphosphatieren folgende Gehalte aufweisen:
Zink im Bereich von 0,4 bis 5 g/L,
Mangan im Bereich von 0,5 bis 5,2 g/L,
Kupfer im Bereich von 0,008 bis 0,050 g/L.

Wenn vorphosphatiert wird, insbesondere erfindungsgemäß vorphosphatiert wird, dann kann auch in folgender Weise erfindungsgemäß nachphosphatiert werden, indem zumindest teilweise vorphosphatierte, ggfs. zumindest teilweise umgeformte, ggfs. zumindest teilweise geschweißte metallische Substrate phosphatiert werden durch Mangan-Zink-Phosphatieren mit einer wässerigen Phosphatierungslösung, bei dem der Phosphatierungslösung kein Nickel absichtlich zugesetzt wird oder nur mit einem Nickel-Gehalt der Phosphatierungslösung von bis zu 0,3 g/L gearbeitet wird, das dadurch gekennzeichnet ist,
daß die Phosphatierungslösung folgende Gehalte aufweist:
Zink im Bereich von 0,05 bis 5 g/L und
Mangan im Bereich von 0,075 bis 5,2 g/L.

Die ermittelten Beschichtungs- und Korrosionsschutzergebnisse sind insbesondere bei Zink-haltigen Oberflächen hervorragend.

Bei dem erfindungsgemäßen Beschichtungsverfahren kann die Phosphatierungslösung folgende Gehalte insbesonders für Teile aufweisen:
Zink im Bereich von 0,6 bis 1,4 g/L,
Mangan im Bereich von 0,7 bis 2,0 g/L,
Zink : Mangan - Gewichtsverhältnis im Bereich von 0,6 : 1 bis 0,95 : 1,
Phosphat berechnet als PO₄ im Bereich von 12 bis 25 g/L,
Zink : Phosphat - Gewichtsverhältnis im Bereich von 0,02 bis 0,12,
Kupfer im Bereich von 0,008 bis 0,025 g/L,
Gesamtgehalt an Fluorid als freies Fluorid, als gebundenes Fluorid oder/und als wenigstens ein Komplexfluorid im Bereich von 0 bis 6 g/L, berechnet als F,
wobei das Komplexfluorid SiF₆ einen Gehalt im Bereich von 0 bis 4,5 g/L aufweist, berechnet als SiF₆, und
Nitrat im Bereich von 0 bis zu 22 g/L oder/und wenigstens einen anderen Beschleuniger ausgewählt aus der Gruppe von Nitrit bzw. Verbindungen auf Basis von Hydroxylamin, Nitroguanidin oder/und Peroxid im Bereich jeweils von 0,01 bis 2 g/L.

Bei dem erfindungsgemäßen Beschichtungsverfahren kann die Phosphatierungslösung folgende Gehalte insbesonders für Band, besonders bevorzugt für verzinkte Band-Oberflächen, aufweisen:
Zink im Bereich von 0,1 bis 4 g/L,
Mangan im Bereich von 0,5 bis 5 g/L,
Zink : Mangan - Gewichtsverhältnis im Bereich von 0,02 : 1 bis 0,9 : 1,
Phosphat berechnet als PO₄ im Bereich von 10 bis 40 g/L,
Zink : Phosphat - Gewichtsverhältnis im Bereich von 0,0025 bis 0,4,
Kupfer im Bereich von 0,008 bis 0,032 g/L,
Gesamtgehalt an Fluorid als freies Fluorid, als gebundenes Fluorid oder/und als wenigstens ein Komplexfluorid im Bereich von 0 bis 6 g/L, berechnet als F,
wobei das Komplexfluorid SiF₆ einen Gehalt im Bereich von 0 bis 4,5 g/L aufweist, berechnet als SiF₆, und
Nitrat im Bereich von 0 bis zu 22 g/L oder/und wenigstens einen weiteren Beschleuniger ausgewählt aus der Gruppe von Nitrit bzw. Verbindungen auf Basis von Hydroxylamin, Nitroguanidin oder/und Per-oxid im Bereich jeweils von 0,01 bis 2 g/L.

Bei dem erfindungsgemäßen Beschichtungsverfahren weist die Phosphatierungslösung zum Vorphosphatieren folgende Gehalte auf:
Zink im Bereich von 1,3 bis 2,3 g/L,
Mangan im Bereich von 1,7 bis 2,6 g/L,
Zink : Mangan - Gewichtsverhältnis im Bereich von 0,5 : 1 bis 0,95 : 1,
Phosphat berechnet als PO₄ im Bereich von 10 bis 20 g/L,
Zink : Phosphat - Gewichtsverhältnis im Bereich von 0,06 bis 0,23,
Kupfer im Bereich von 0,008 bis 0,048 g/L,
Gesamtgehalt an Fluorid als freies Fluorid, als gebundenes Fluorid oder/und als wenigstens ein Komplexfluorid im Bereich von 0 bis 6 g/L, berechnet als F,
wobei das Komplexfluorid SiF₆ einen Gehalt im Bereich von 0 bis 4,5 g/L aufweist, berechnet als SiF₆, und
Nitrat im Bereich von 0 bis zu 30 g/L oder/und wenigstens einen anderen Beschleuniger ausgewählt aus der Gruppe von Nitrit bzw. Verbindungen auf Basis von Hydroxylamin oder/und Nitroguanidin im Bereich jeweils von 0,01 bis 2 g/L bzw. von Peroxid im Bereich von 0,01 bis 3 g/L.

Hierbei liegt der Nitrat-Gehalt, falls Nitrat als Beschleuniger zugegeben wird, vorzugsweise im Bereich von 3 bis 22 g/L, bzw. der Gehalt an mindestens einer Verbindung auf Basis Peroxid im Bereich von 0,5 bis 2,5 g/L, insbesondere dann, wenn Nitrat-frei gearbeitet wird.

Bei dem erfindungsgemäßen Beschichtungsverfahren kann die Phosphatierungslösung außerdem folgende Gehalte vorzugsweise aufweisen:
Zink im Bereich von 0,6 bis 1,4 g/L,
Mangan im Bereich von 0,7 bis 2,0 g/L,
Zink : Mangan - Gewichtsverhältnis im Bereich von 0,6 : 1 bis 0,95 : 1,
Phosphat berechnet als PO₄ im Bereich von 12 bis 25 g/L,
Zink : Phosphat - Gewichtsverhältnis im Bereich von 0,02 bis 0,12,
Gesamtgehalt an Fluorid als freies Fluorid, als gebundenes Fluorid oder/und als wenigstens ein Komplexfluorid im Bereich von 0,012 bis 6 g/L, berechnet als F,
wobei der Gesamtgehalt an Komplexfluoriden von Titan, Hafnium oder/und Zirkonium im Bereich von 0,002 bis 0,5 g/L beträgt, berechnet als F₆, und
wobei das Komplexfluorid SiF₆ einen Gehalt im Bereich von 0 bis 4,5 g/L aufweist, berechnet als SiF₆, und
Nitrat im Bereich von 0 bis zu 22 g/L oder/und wenigstens einen weiteren Beschleuniger ausgewählt aus der Gruppe von Nitrit bzw. Verbindungen auf Basis von Hydroxylamin, Nitroguanidin oder/und Per-oxid im Bereich jeweils von 0,01 bis 2 g/L.

Bei dem erfindungsgemäßen Beschichtungsverfahren können die metallischen Substrate in einer Zeit bis zu 20 Minuten beschichtet werden, wobei Band vorzugsweise in einer Zeit von 0,1 bis 120 Sekunden und besonders bevorzugt in einer Zeit von 0,3 bis 60 Sekunden beschichtet wird und wobei Teile vorzugsweise in einer Zeit von 1 bis 12 Minuten und besonders bevorzugt in einer Zeit von 2 bis 8 Minuten beschichtet werden.

Bei dem erfindungsgemäßen Beschichtungsverfahren kann die Temperatur der Phosphatierungslösung bei der Beschichtung im Bereich von 10 bis 72 °C liegen, bei Band vorzugsweise im Bereich von 40 bis 70 °C und bei Teilen vorzugsweise im Bereich von 20 bis 60 °C und besonders bevorzugt im Bereich von 32 bis 58 °C.

Bei dem erfindungsgemäßen Beschichtungsverfahren kann die Freie Säure 0,1 bis 10 Punkte betragen, kann die Gesamtsäure 5 bis 50 Punkte betragen, kann die Gesamtsäure nach Fischer 3 bis 25 Punkte betragen und kann das Verhältnis der Freien Säure zur Gesamtsäure nach Fischer (S-Wert) insbesondere im Bereich von 0,01 bis 0,7 liegen, wobei die Freie Säure vorzugsweise 0,15 bis 4 Punkte beträgt, die Gesamtsäure nach Fischer vorzugsweise 12 bis 35 Punkte beträgt und das Verhältnis der Freien Säure zur Gesamtsäure nach Fischer (S-Wert) vorzugsweise im Bereich von 0,03 bis 0,3 liegt. Für das Vorphosphatieren ist es besonders bevorzugt, Werte der Freien Säure im Bereich von 3 bis 4,4 Punkten und Werte der Gesamtsäure nach Fischer im Bereich von 18,5 bis 21 Punkten und somit einen S-Wert im Bereich von 0,14 bis 0,24 zu verwenden.

Zur Bestimmung der Freien Säure wird 1 ml der Phosphatierungslösung nach Verdünnung auf ca. 50 ml mit destilliertem Wasser, ggf. unter Zusatz von K₃(Co(CN)₆) oder von K₄(Fe(CN)₆) zwecks Beseitigung störender Metallkationen, unter Verwendung von Dimethylgelb als Indikator mit 0,1 M NaOH bis zum Umschlag von rosa nach gelb titriert. Die verbrauchte Menge an 0,1 M NaOH in ml ergibt den Wert der Freien Säure (FS) in Punkten.

Der Gesamtgehalt an Phosphationen wird dadurch bestimmt, daß im Anschluß an die Ermittlung der Freien Säure die Titrationslösung nach Zugabe von 20 ml 30 %iger neutraler Kaliumoxalatlösung gegen Phenolphthalein als Indikator bis zum Umschlag von farblos nach rot mit 0,1 M NaOH titriert wird. Der Verbrauch an 0,1 M NaOH in ml zwischen dem Umschlag mit Dimethylgelb und dem Umschlag mit Phenolphthalein entspricht der Gesamtsäure nach Fischer (GSF). Wenn dieser Wert mit 0,71 multipliziert wird, ergibt sich der Gesamtgehalt an Phosphationen (Siehe W. Rausch: "Die Phosphatierung von Metallen". Eugen G. Leuze-Verlag 1988, pp. 300 ff).

Der sogenannte S-Wert ergibt sich durch Division des Wertes der Freien Säure durch den Wert der Gesamtsäure nach Fischer.

Die Gesamtsäure (GS) ist die Summe aus den enthaltenen zweiwertigen Kationen sowie freien und gebundenen Phosphorsäuren (letztere sind Phosphate). Sie wird durch den Verbrauch an 0,1 molarer Natronlage unter Verwendung des Indikators Phenolphthalein bestimmt. Dieser Verbrauch in ml entspricht der Punktzahl der Gesamtsäure.

Bei dem erfindungsgemäßen Beschichtungsverfahren kann der pH-Wert der Phosphatierungslösung im Bereich von 1 bis 4 liegen, vorzugsweise im Bereich von 2,2 bis 3,6.

Bei dem erfindungsgemäßen Beschichtungsverfahren kann die Phosphatierungslösung auf die Oberfläche der Substrate durch Aufrakeln, Fluten, Spritzen, Sprühen, Streichen, Tauchen, Vernebeln, Walzen, wobei einzelne Prozeßschritte miteinander kombiniert sein können - insbesondere das Sprühen und Tauchen, das Sprühen und Abquetschen sowie das Tauchen und Abquetschen, und ggfs. nachträgliches Abquetschen aufgebracht werden.

Bei dem erfindungsgemäßen Beschichtungsverfahren können mit der Phosphatierungslösung Substrate mit einer vorwiegend Aluminium, Eisen, Kupfer, Magnesium, Zinn oder Zink enthaltenden metallischen Oberfläche beschichtet werden, insbesondere Oberflächen von mindestens einem der Werkstoffe auf Basis Aluminium, Eisen, Stahl, Zink oder/und Legierungen mit einem Gehalt an Aluminium, Eisen, Kupfer, Magnesium, Zinn bzw. Zink.

Bei dem erfindungsgemäßen Beschichtungsverfahren kann mit der Phosphatierungslösung eine Phosphatbeschichtung abgeschieden werden, die ein Schichtgewicht im Bereich von 0,2 bis 6 g/m² aufweist, vorzugsweise im Bereich von 1 bis 4 g/m². Insbesondere bei Aluminium-Oberflächen kann es in manchen Fällen gewünscht sein, nur sehr geringe Schichtgewichte aufzubringen. Bei der Vorbehandlung bzw. Behandlung von Oberflächen von Aluminium bzw. Aluminiumlegierungen ist es nicht unbedingt erforderlich, einen hohen Bedeckungsgrad beim Phosphatieren zu erzielen: Es genügt ein Schichtgewicht der Phosphatschicht im Bereich von 0,2 g/m² bis 1 g/m². Ein Schichtgewicht von bis zu 6 g/m² und somit eine vollständige Bedeckung ist jedoch nicht nachteilig, wenn von einem erhöhten Chemikalienverbrauch abgesehen wird. Bei Oberflächen von Eisen, Stahl und Zink ist jedoch eine nahezu vollständige oder vollständige Bedeckung mit der Phosphatschicht erforderlich. Dies wird mit einem Schichtgewicht im Bereich von 1 g/m² bis 6 g/m² erreicht. Beim Vorphosphatieren wird ein Schichtgewicht im Bereich von 0,8 bis 2,4 g/m² bevorzugt, insbesondere von 1 bis 2 g/m², vor allem, wenn die Substrate mit der Vorphosphatbeschichtung zum Schweißen verwendet werden sollen.

Bei dem erfindungsgemäßen Beschichtungsverfahren können die metallischen Oberflächen vor dem Phosphatieren gereinigt, gebeizt, gespült oder/und aktiviert werden. Die Reinigung erfolgt vorzugsweise alkalisch und findet insbesondere über einen Zeitraum von 10 Sekunden bis 15 Minuten statt. Ein schwacher alkalischer Reiniger kann für metallische Oberflächen meist über 2 bis 4 Minuten eingesetzt werden. Für starke alkalische Reiniger sind die Behandlungszeiten entsprechend kürzer. Es kann vorteilhaft sein, dem Reiniger einen Titan-haltigen Aktivator zuzusetzen. Insbesonders für Aluminium und Aluminiumlegierungen kann auch eine saure Reinigung gewählt werden.

Für das anschließende Spülen ist grundsätzlich jede reinere Wasserqualität geeignet. Es empfiehlt sich Leitungswasser. Falls die Aktivierung in einem getrennten Bad oder Spülschritt erfolgen kann, was meist vorteilhaft ist, sollte vollentsalztes Wasser als Lösemittel nach vorhergehendem Spülen eingesetzt werden. Eine Aktivierung ist oft sehr vorteilhaft, um Kristallkeime auszubilden. Die Aktivierung kann insbesondere auf Basis Titan erfolgen. Eine Aktivierung über 10 bis 30 Sekunden ist oft ausreichend, auch wenn sie grundsätzlich über 0,1 Sekunden bis zu mindestens 5 Minuten dauern kann. Die Aktivierung kann auch länger als 5 Minuten genutzt werden, ist deswegen aber nicht wirkungsvoller. Es kann vorteilhaft sein, Kupfer oder/und einen der grundsätzlich bekannten Zusätze der Aktivierung zuzugeben.

Bei dem erfindungsgemäßen Beschichtungsverfahren können die phosphatierten Substrate mindestens einmal gespült und ggfs. nach einer oder zwischen zwei Spülvorgängen mit einer Nachspüllösung zur zusätzlichen Passivierung behandelt werden. Für das Spülen nach dem Phosphatieren ist grundsätzlich jede reinere Wasserqualität geeignet. Es empfiehlt sich Leitungswasser oder vollentsalztes Wasser - z.B. ein Tauchen in kaltes Stadtwasser über 10 Sekunden - und anschließend im nächsten Spülschritt vollentsalztes Wasser - z.B. ein Sprühen von kaltem VE-Wasser über 10 Sekunden. Beim Nachspülen kann ein Zusatz z.B. von Zirkonhexafluorid oder von einer der grundsätzlich bekannten organischen Substanzen verwendet werden, wodurch eine nochmalige Verbesserung der Korrosionsbeständigkeit und der Lackhaftung der Beschichtung erzielt werden kann.

Bei dem erfindungsgemäßen Beschichtungsverfahren können die metallischen Oberflächen vor dem Phosphatieren vorphosphatiert werden. Die Vorphosphatierung von Substraten ist vorteilhaft, wenn z.B. das vorphosphatierte Band anschließend umgeformt wird oder wenn Teile im korrosionsgeschützten Zustand zwischengelagert, verklebt oder/und verschweißt werden. Die derart vorbehandelten Substrate lassen sich dadurch wesentlich leichter umformen und sind korrosionsgeschützt. Es ist eine besonders vorteilhafte Verfahrensvariante, daß die metallischen Oberflächen nach dem Phosphatieren (=Vorphosphatieren) geschweißt, verklebt oder/und umgeformt werden und ggfs. danach erneut phosphatiert werden.

In den meisten Fällen sind die Phosphatieranlagen in der Automobilindustrie mit schwach alkalischen Reinigern ausgerüstet in manchen Fällen jedoch auch mit stark alkalischen Reinigern. Es war überraschend, daß die erfindungsgemäße erste kristalline Vorphosphatierungsschicht gegen den Einfluß starker alkalischer Reiniger deutlich resistenter ist. Bei den üblicherweise angewandten kurzen Behandlungszeiten mit einem starken alkalischen Reiniger wurde die erfindungsgemäße erste Phosphatschicht nicht oder nur geringfügig beeinträchtigt.

Die auf dem Metallteil aufgebrachte erste oder/und zweite Phosphatschicht kann mit einem Öl, einer Dispersion oder einer Suspension, insbesondere mit einem Umformöl oder Korrosionsschutzöl oder/und einem Schmierstoff wie einem Trockenschmierstoff z.B. mit einem Wachs-haltigen Gemisch, benetzt werden. Das Öl oder der Schmierstoff dient als zusätzlicher temporärer Korrosionsschutz und kann zusätzlich auch einen Umformvorgang erleichtern, wobei auch das umgeformte Metallteil eine erhöhte Korrosionsbeständigkeit aufweist. Eine Beschichtung mit einem Öl kann auch auf der zweiten Phosphatschicht von Interesse sein, wenn die zu lackierenden Teile zu einer weiter entfernten Lackieranlage transportiert werden sollen.

Eine ggf. vorhandene Öl-Auflage oder Schmierstoff-Auflage kann von bzw. aus der ersten oder zweiten Phosphatschicht entfernt werden, um die Beschichtung für die Lackierung, Umformung, Montage, zum Kleben oder zum Schweißen vorzubereiten. Das Öl muß für eine nachfolgende Lackierung entfernt werden, während es bei anderen Verfahrensgängen entfernt werden kann.

Die mit einer ersten oder/und zweiten Phosphatschicht versehenen Metallteile können mit einem Lack, mit einer andersartigen organischen Beschichtung oder/und mit einer Klebstoffschicht beschichtet und ggf. danach umgeformt werden, wobei die derart beschichteten Metallteile zusätzlich mit anderen Teilen zusammengeklebt oder/und geschweißt werden können. Es sind heute die unterschiedlichsten organischen Beschichtungen bekannt bzw. auf einer Phosphatschicht einsetzbar. Hierbei fallen nicht alle organischen Beschichtungen unter die Definition von Lacken. Die mit einer ersten oder/und zweiten Phosphatschicht versehenen Metallteile können entweder vor oder erst nach dem Umformen oder/und Montieren mit einer Beschichtung versehen werden.

Die erfindungsgemäß phosphatbeschichteten Metallteile können in einer sogenannten Band-Anlage bei Bedarf beölt bzw. bei Bedarf entfettet oder/und gereinigt werden, bevor sie anschließend in einer Lackieranlage beschichtet werden.

Die erfindungsgemäß phosphatbeschichteten Metallteile können für die Herstellung z.B. von Geräteverkleidungen bei Bedarf beölt, bei Bedarf umgeformt bzw. bei Bedarf entfettet oder/und gereinigt werden, bevor sie anschließend - falls gewünscht - in einer Lackieranlage beschichtet werden. Aus ökonomischen Gründen wird vorzugsweise auf das Entölen vor dem Verkleben bzw. Verschweißen verzichtet.

Die erfindungsgemäß phosphatbeschichteten Metallteile können für die Herstellung z.B. von Automobilen beölt und umgeformt werden, wobei dann mehrere Metallteile zusammengeschweißt, zusammengeklebt bzw. anderweitig verbunden werden und anschließend die montierten Teile entfettet oder/und gereinigt werden können, bevor sie anschließend in einer Lackieranlage beschichtet werden können.

Die nach dem erfindungsgemäßen Verfahren beschichteten Metallteile können als vorphosphatierte Metallteile für eine erneute Konversionsbehandlung oder für eine erneute Konversionsvorbehandlung insbesondere vor der Lackierung bzw. als vorbehandelte Metallteile - insbesondere für die Automobilindustrie - vor allem vor der Lackierung oder als endphosphatierte Metallteile, die ggf. noch nachträglich lackiert, andersartig organisch oder/und mit einer Folie beschichtet, mit einer Klebstoffschicht beschichtet, umgeformt, montiert oder/und zusammengeschweißt werden. Für das Schweißen ist jedoch üblicherweise Voraussetzung, daß die Phosphatschicht nicht zu dick und eine ggfs. auflagernde organische Beschichtung elektrisch leitfähig ist.

Bei dem erfindungsgemäßen Beschichtungsverfahren können die mit einer ersten oder/und zweiten Phosphatschicht versehenen Metallteile mit einem Lack, mit einer andersartigen organischen Beschichtung, mit einer Folie oder/und mit einer Klebstoffschicht beschichtet und ggf. umgeformt werden, wobei die derart beschichteten Metallteile zusätzlich mit anderen Teilen zusammengeklebt, zusammengeschweißt oder/und anderweitig miteinander verbunden werden können.

Auch ein Mix aus verschiedenen Materialien wie z.B. Metallteilen aus einem unbeschichteten Stahl und vorphosphatierten Metallteilen kann mit einem erfindungsgemäßen Verfahren problemlos gleichzeitig nebeneinander beschichtet werden.

Bei vormontierten oder montierten Metallteilen kann mit der Vorphosphatierung in Hohlräumen auch ohne Auftrag eines Lackes ein besserer Korrosionsschutz als nach dem zitierten Stand der Technik erzielt werden.

Es kann vorteilhaft sein, direkt auf die erste oder/und zweite Phosphatschicht eine Passivierungslösung aufzubringen, insbesondere durch Spritzen, Tauchen oder Walzen. Hierbei wird vorzugsweise eine Nachspüllösung zur weiteren Erhöhung der Korrosionsbeständigkeit und der Lackhaftung eingesetzt, die mindestens eine Substanz auf Basis Cr, Ti, Zr, Ce oder/und anderer Seltenerdelemente einschließlich Lanthan bzw. Yttrium, Tannin, Silan/Siloxan, Phosphor enthaltende self-assembling molecules, Phosphonate bzw. Polymere enthalten kann.

Beim Vergleich von verschiedenartigen metallischen Oberflächen wie z.B. solchen von Stahl wie kaltgewalztem Stahl (CRS) und verzinkten Stählen wirkt sich die gleiche Phosphatierungslösung teilweise deutlich unterschiedlich aus. Bei schmelztauchverzinkten Stählen (HDG) und bei elektrolytisch verzinkten Stählen (EG) wirkt sich das aus der Verzinkung herauslösbare Zink auf die Badzusammensetzung deutlich aus. Bei HDG wirkt sich u.U. der Gehalt an Aluminium in der HDG-Oberfläche negativ aus: Zur Optimierung der Phosphatierung bei HDG und bei Aluminium-Oberflächen ist dann ein Zusatz von Fluoriden in freier oder/und gebundener Form z.B. als Flußsäure bzw. Siliciumhexafluorid günstig.

Überraschenderweise ist die erfindungsgemäße Beschichtung bezüglich der Korrosionsbeständigkeit und der Lackhaftung einer vergleichbaren Nickel-reichen Beschichtung gleichwertig, jedoch deutlich kostengünstiger und deutlich umweltverträglicher als die Nickel-reiche Beschichtung. Dabei ist es besonders überraschend, daß die hochwertige Beschichtungsqualität weitgehend unabhängig von dem gewählten Beschleuniger bzw. Beschleunigergemisch ist. Das erfindungsgemäße Beschichtungsverfahren ist außerdem unerwartet robust. Außerdem war es erstaunlich, daß die gleichen hochwertigen Eigenschaften über das Zn : Mn - Verhältnis in dem sehr weiten Bereich von 0,9 : 1 bis 0,3 : 1 ohne längere Versuche erzielt werden konnten. Darüber hinaus konnten die gleichen hochwertigen Eigenschaften auch außerhalb dieses Bereiches eingestellt werden, wenn die Zusammensetzung des Bades entsprechend angepaßt wurde.

Das erfindungsgemäße Verfahren hat gegenüber den bisher beschriebenen und praktizierten Verfahren den Vorteil, daß es bei geringen Chemikalienverbräuchen und vergleichsweise geringen Kosten hervorragende Beschichtungen, insbesondere auf HDG, liefert und hierbei besonders umweltfreundlich ist. Aufgrund dessen, daß kein Nickel bei diesem Verfahren zugesetzt wird, gelangen weniger Schwermetalle in das Abwasser, in den Phosphatschlamm und in den Schleifstaub. Im Vergleich zu ähnlichen Bädern besteht die Möglichkeit, die Badtemperatur beim Phosphatieren noch weiter abzusenken. Aufgrund eines geringfügig erhöhten Kupfergehaltes kann die Lackhaftung noch weiter verbessert werden.

Ein Konzentrat zum Ansetzen der Phosphatierungslösung oder eine Ergänzungslösung zum Ergänzen der Phosphatierungslösung kann insbesondere Zink, Mangan, Kupfer und Phosphorsäure enthalten, aber nur manchmal Alkalien oder/und Beschleuniger.

Die nach dem erfindungsgemäßen Verfahren beschichteten Substrate können verwendet werden bei der Bandherstellung, für die Herstellung von Komponenten oder Karosserieteilen bzw. vormontierten Elementen in der Automobil- oder Luftfahrtindustrie, in der Bauindustrie, in der Möbelindustrie, für die Herstellung von Geräten und Anlagen, insbesondere Haushaltsgeräten, Meßgeräten, Kontrolleinrichtungen, Prüfeinrichtungen, Konstruktionselementen, Verkleidungen sowie von Kleinteilen; als Draht, Drahtwicklung, Drahtgeflecht, Blech, Verkleidung, Abschirmung, Karosserie oder Teil einer Karosserie, als Teil eines Fahrzeugs, Anhängers, Wohnmobils oder Flugkörpers, als elektronische oder mikroelektronische Komponente, als Abdeckung, Gehäuse, Lampe, Leuchte, Ampelelement, Möbelstück oder Möbelelement, Element eines Haushaltsgeräts, Gestell, Profil, Formteil komplizierter Geometrie, Leitplanken-, Heizkörper- oder Zaunelement, Stoßstange, Teil aus oder mit mindestens einem Rohr oder/und einem Profil, Fenster-, Tür- oder Fahrradrahmen oder als Kleinteil wie z.B. eine Schraube, Mutter, Flansch, Feder oder ein Brillengestell.

### Beispiele:

Der Gegenstand der Erfindung wird anhand von Ausführungsbeispielen näher erläutert:

Die Beispiele wurden unter Verwendung der im folgenden aufgeführten Substrate bzw. Verfahrensschritte durchgeführt:

Die Prüfbleche bestanden aus einer Aluminiumlegierung AlMgSi mit einer Dicke von 1,2 mm bzw. aus unbeschichtetem durchlaufgeglühten Karosseriestahl (CRS) bzw. aus beidseitig verzinktem Stahl mit einer Beschichtung aus einer Schmelztauchverzinkung (HDG) bzw. aus einer elektrolytischen Verzinkung (EG) mit einer Gesamtdicke von 0,7 mm. Die Fläche der Substrate betrug 400 cm² (über beide Flächen gemessen).
a) Die Substratoberflächen wurden in einer 2 %-igen Lösung eines alkalischen Reinigers über 5 Minuten bei 60 °C gereinigt und hierbei gründlich entfettet.
b) Es folgte eine Spülung mit Leitungswasser über 0,5 Minuten bei Raumtemperatur.
c) Dann wurden die Oberflächen durch Tauchen in einem titanhaltigen Aktivierungsmittel über 0,5 Minuten bei Raumtemperatur aktiviert.
d) Danach wurden die Oberflächen über 3 Minuten bei 55 °C durch Tauchen in die Phosphatierungslösung phosphatiert.
e) Anschließend wurde zuerst mit Leitungswasser und danach mit vollentsalztem Wasser gespült.
f) Dann wurden die beschichteten Substrate im Trockenofen bei 80 °C über 10 Minuten getrocknet.
g) Schließlich wurden die trockenen Prüfbleche mit einem kathodischen Tauchlack versehen und mit den weiteren Schichten eines in der Automobil für Karossen üblichen Lackaufbaus beschichtet (Schichtaufbau und Lacke entsprechend Daimler Chrysler in Mondsilber).

Die Zusammensetzung der jeweiligen Phosphatierungslösung sowie die Ergebnisse der Prüfungen sind in den Tabellen 1 bis 3 aufgeführt.

**Tabelle 1: Zusammensetzung der Phosphatierungslösungen in g/L bzw. Punkten der Freien Säure (FS) bzw. Gesamten Säure (GS)**

| | Zn | Mn | Ni | Cu | TiF₆ + ZrF₆** | PO₄ | NO₂ | NO₃ | HA etc. | FS | GS |
|---|---|---|---|---|---|---|---|---|---|---|---|
| B 1 | 1,2 | 1,25 | - | 0,008 | - | 16,5 | 0,1 | - | - | 1,8 | 32 |
| B 2 | 1,2 | 1,5 | - | 0,008 | - | 18 | 0,1 | 3 | - | 1,8 | 32 |
| B 3 | 1,2 | 2,5 | - | 0,008 | - | 18 | 0,1 | 3 | - | 1,8 | 32 |
| B 4 | 1,4 | 2,5 | - | 0,010 | - | 16,5 | - | 3 | 0,04 H₂O₂ | 1,8 | 32 |
| B 5 | 1,4 | 1,5 | - | 0,015 | - | 16,5 | - | 5 | 1,5 HA | 1,8 | 32 |
| B 6 | 1,4 | 2,5 | - | 0,015 | - | 16,5 | - | 5 | 1,5 HA | 1,8 | 32 |
| B 7 | 1,4 | 1,5 | - | 0,025 | - | 16,5 | - | 5 | 1,5 HA | 1,8 | 32 |
| B 8 | 1,4 | 2,5 | - | 0,025 | - | 16,5 | - | 5 | 1,5 HA | 1,8 | 32 |
| B 9 | 1,4 | 1,5 | - | 0,040 | - | 16,5 | - | 5 | 1,5 HA | 1,8 | 32 |
| B 10 | 1,4 | 2,5 | - | 0,040 | - | 16,5 | - | 5 | 1,5 HA | 1,8 | 32 |
| B 11 | 1,2 | 1,8 | - | - | 0,003+ 0,002 | 18 | - | 3 | 1,5 HA | 1,8 | 32 |
| B 12 | 1,2 | 1,8 | - | - | 0,006+ 0,005 | 18 | - | 3 | 1,5 HA | 1,8 | 32 |
| B 13 | 1,2 | 1,8 | - | - | 0,056+ 0,045 | 18 | - | 3 | 1,5 HA | 1,8 | 32 |
| B 14 | 1,2 | 1,8 | - | - | 0,011+ 0,008 | 18 | - | 3 | 1,5 HA | 1,8 | 32 |
| B 15 | 1,2 | 1,8 | - | 0,008 | 0,003+ 0,002 | 18 | - | 3 | 1,5 HA | 1,8 | 32 |
| B 16⁺ | 1,2 | 1,95 | - | 0,008 | 0,003 (Ti) | 18,8 | - | - | 1,1 HA | 3,4 | 32 |
| B 17⁺ | 1,2 | 1,95 | - | 0,008 | 0,004 (Zr) | 18,8 | - | - | 1,1 HA | 3,4 | 32 |
| B 18 | 1,4 | 3,5 | - | 0,015 | - | 16,5 | - | 5 | 1,5 HA | 1,8 | 32 |
| B 19 | 1,2 | 1,3 | - | - | 0,006+ 0,005 | 18 | - | 3 | 1,5 HA | 1,8 | 32 |
| B 20 | 1,2 | 2,5 | - | - | 0,006+ 0,005 | 18 | - | 3 | 1,5 HA | 1,8 | 32 |
| VB 1 | 1,2 | 0,5 | - | 0,005 | - | 18 | 0,1 | 3 | - | 1,8 | 32 |
| VB 2 | 1,2 | 0,5 | - | 0,005 | - | 16,5 | 0,1 | 3 | - | 1,8 | 32 |
| VB 3 | 1,2 | 0,8 | - | 0,005 | - | 18 | 0,1 | 3 | - | 1,8 | 32 |
| VB 4 | 1,2 | 1,0 | 1,0 | - | - | 18 | 0,1 | 3 | - | 1,8 | 32 |
| VB 5 | 2,5 | 2,0 | - | 0,008 | - | 18 | - | 3 | 1,5 HA | 1,8 | 32 |
| VB 6 | 1,2 | 1,0 | - | - | - | 18 | 0,1 | 3 | - | 1,8 | 32 |
| VB 7 | 1,4 | 2,5 | - | 0,002 | - | 18 | 0,1 | 3 | - | 1,8 | 32 |
| VB 8⁺ | 1,2 | 1,95 | - | 0,005 | - | 18,8 | - | - | 1,1 HA | 3,4 | 32 |

| | | | | | | | | | | | |
|---|---|---|---|---|---|---|---|---|---|---|---|
| "-" bedeutet ohne Zugabe eines Zusatzes "**" bedeutet berechnet als F₆ "+" bedeutet einen Gehalt an 3 g/L SiF₆ und 0,13 g/L SO₄ | | | | | | | | | | | |

Zusätzlich enthielten die Bäder einen geringen bis gewissen Natrium-Gehalt sowie für die Vorbehandlung von Aluminium-Oberflächen einen Gehalt an freiem Fluorid im Bereich von 80 bis 250 mg/L durch Zugabe von Ammoniumbifluorid. Die Gesamtsäure ist näherungsweise angegeben.

Tabelle 2: Ergebnisse der Haftungs- und Korrosionsprüfungen an Aluminium-, Stahl- bzw. verzinkten Oberflächen an erfindungsgemäß (B) beschichteten bzw. in den Vergleichsbeispielen (VB) gewonnenen Beschichtungen durch
1. Gitterschnitt-Prüfung nach DIN/EN ISO 2409 nach Lagerung über 40 h in 5 %iger NaCl-Lösung (BMW-Spezifikation),
2. Steinschlag-Test über 12 Runden nach VW-Spezifikation bzw.
3. Salzsprüh-Kondenswasser-Wechseltest über 12 Runden nach VDA 621-415. A = geschliffen, B = ungeschliffen.

| | Gitterschnitt-Prüfung | | | | Steinschlag-Test nach VW | | | Wechseltest nach VDA 621-415 | | | |
|---|---|---|---|---|---|---|---|---|---|---|---|
| | Gt-Note | | | | % Lackverlust | | | mm Unterwanderung | | | |
| | CRS | EG | HDG | Al | CRS | EG | HDG | CRS | EG | HDG | Al |
| | | | | A/B | | | | | | | |
| B 1 | 1 | 1 | 1 | 1/1 | - | - | - | - | - | - | - |
| B 2 | 1 | 1 | 1 | 1/1 | - | - | - | - | - | - | - |
| B 3 | 1 | 1 | 1 | 1/1 | - | - | - | - | - | - | - |
| B 4 | 1 | 1 | 1 | 1/1 | 2 | 5 | 8 | 0,5 | 2,0 | 1,8 | - |
| B 5 | 1 | 1 | 2,5 | 1/1 | 3 | 10 | 10 | 0,5 | 2,5 | 2,0 | - |
| B 6 | 1 | 1 | 1 | 1/1 | 3 | 6 | 12 | 0,5 | 2,0 | 1,5 | - |
| B 7 | 1 | 1 | 2 | 1/1 | 5 | 10 | 15 | 0,5 | 2,0 | 1,7 | - |
| B 8 | 1 | 1 | 0 | 1/1 | 4 | 5 | 6 | 0,5 | 2,0 | 1,5 | - |
| B 9 | 1 | 1 | 1,5 | 1/1 | 5 | 8 | 10 | 0,5 | 2,5 | 2,0 | - |
| B 10 | 0 | 0 | 0 | 1/1 | 3 | 4 | 5 | 0,5 | 2,0 | 1,3 | - |
| B 11 | 1 | 1 | 1 | 1/1 | - | - | - | - | - | - | - |
| B 12 | 1 | 0 | 1 | 1/1 | - | - | - | - | - | - | - |
| B 13 | 0 | 0 | 1 | 2/1 | - | - | - | - | - | - | - |
| B 14 | 0 | 1 | 1 | 1/1 | - | - | - | - | - | - | - |
| B 15 | 1 | 1 | 1 | 1/0 | - | - | - | - | - | - | - |
| B 16 | - | - | 0,5 | - | - | - | - | - | - | - | - |
| B 17 | - | - | 2,5 | - | - | - | - | - | - | - | - |
| B 18 | 1 | 1 | 0 | 1/1 | 4 | 5 | 6 | 0,5 | 2,0 | 1,5 | - |
| B 19 | 1 | 1 | 2 | 1/1 | - | - | - | - | - | - | - |
| B 20 | 1 | 0 | 0 | 1/1 | - | - | - | - | - | - | - |
| VB 1 | 1 | 4 | 3 | 1/1 | 4 | 80 | 100 | 0,5 | 2,5 | 3,0 | - |
| VB 2 | 1 | 4 | 4 | - | 8 | 60 | 35 | 1,5 | 2,0 | 2,5 | - |
| VB 3 | 1 | 3 | 4 | 1/1 | 3 | 80 | 25 | 0,5 | 2,5 | 2,4 | - |
| VB 4 | 1 | 1 | 1 | 1/1 | 3 | 4 | 8 | 0,5 | 2,0 | 1,2 | - |
| VB 5 | 1 | 3 | 4 | 1/1 | 10 | 80 | 50 | 2,0 | 3,5 | 4,0 | - |
| VB 6 | 1 | 3 | 5 | 2/1 | 10 | 70 | 90 | 2,2 | 3,5 | 3,5 | - |
| VB 7 | 1 | 2 | 2 | 1/1 | 4 | 8 | 18 | 1,0 | 2,5 | 2,0 | |
| VB 8 | - | - | 3,8 | - | - | - | - | - | - | - | - |

Bei der Gitterschnittprüfung wurden die Testnoten im Bereich von 0 bis 5 vergeben für die besten bzw. für die schlechtesten Ergebnisse. Beim Stein-schlag-Test wird der Prozentsatz des Lackverlustes durch den Schichtaufbau bis zur metallischen Substratoberfläche in Flächen-% angegeben, während für den Salzsprüh-Kondenswasser-Wechseltest die korrosive Unterwanderung des Lackes ausgehend von einem Ritz in mm angeführt wird. Die Ergebnisse sind bei allen Prüfungen Mittelwerte über jeweils mehrere geprüfte Bleche.

Bei den Versuchen ergab sich für alle Ergebnisse der Tabelle 2, daß die Ergebnisse der erfindungsgemäßen Beispiele besser wurden mit einem wachsenden Kupfer-Gehalt bzw. bei einem niedrigeren Zn : Mn -Verhältnis der kupferhaltigen Beispiele. Entsprechendes gilt auch für einen wachsenden Hexafluorid-Gehalt an Titan/Zirkonium/Hafnium bzw. bei einem niedrigeren Zn : Mn -Verhältnis der kupferfreien Beispiele. Die Kombination des Kupfer-Gehalts mit dem Hexafluorid-Gehalt an Titan/Zirkonium/Hafnium deutet zumindest für den Gehalt an Titanhexafluorid eine signifikante weitere Verbesserung der Lackhaftungsergebnisse an, die anhand der sich am schwierigsten sich verhaltenen Metalloberfläche (HDG) geprüft wurden. Die Ergebnisse variieren jedoch geringfügig je nach der Art der Metalloberflächen.

Tabelle 3: Ergebnisse der Korrosionsprüfungen an erfindungsgemäß (B) beschichteten bzw. in den Vergleichsbeispielen (VB) gewonnenen Beschichtungen auf der Aluminium-Legierung AlMgSi bzw. an durchlaufgeglühtem Stahl (CRS) durch
1. Filiform-Test nach DIN EN 3665,
2. Salzsprüh-Kondenswasser-Wechseltest über 12 Runden nach VDA 621-415 bzw.
3. Salzsprüh-Test nach DIN 50021 für Stahl,
wobei die Kennbuchstaben den Bearbeitungszustand charakterisieren:
A = geschliffen, B = ungeschliffen

| | Filiform-Test | | Salzsprüh-Humidity Cycle-Test | | Salzsprüh-Test |
|---|---|---|---|---|---|
| | mm Unterwanderung | | mm Unterwanderung | | mm Unterwanderung |
| | AlMgSi | | | | CRS |
| | A | B | A | B | B |
| B 1 | 3,8 | 3,5 | 2,5 | 1,5 | <1 |
| B 2 | 5,0 | 3,1 | 1,8 | 1,2 | <1 |
| B 3 | 5,3 | 1,3 | 1,8 | 0,3 | <1 |
| B 5 | 6,5 | 3,0 | 3,5 | 0,75 | <1 |
| B 6 | 6,0 | 4,0 | 4,0 | 0,5 | <1 |
| B 7 | 6,5 | 3,0 | 3,5 | 1,0 | <1 |
| B 8 | 5,7 | 1,3 | 1,75 | 0,5 | <1 |
| VB 1 | 4,5 | 43,3 | 2,2 | 1,5 | <1 |
| VB 2 | - | - | - | - | 1,5 |
| VB 3 | 6,1 | 5,2 | 3,3 | 1,0 | <1 |
| VB 4 | 4,0 | 2,5 | 2,0 | 1,0 | <1 |

Beim Filiförm-Test wurde der Mittelwert der Größe der filiformen Korrosionserscheinungen in mm gemessen. Beim Salzsprüh-Kondenswasser-Wechseltest und beim Salzsprüh-Test nach DIN 50021 auf Stahl wurde die korrosive Unterwanderung des Lackes ausgehend von einem Ritz in mm auf Grundmetall angegeben. Die Ergebnisse sind bei allen Prüfungen Mittelwerte über jeweils mehrere geprüfte Bleche.

Da bei der großtechnischen Beschichtung immer noch einzelne Stellen von derartigen Blechen nachgeschliffen werden, also einzelne geschliffene Partien zwischen den vorwiegend ungeschliffenen Flächen auftreten, ist dieser Vergleich für die Praxis bedeutsam.

Hierbei zeigte sich, daß beim Testen der Aluminium-Legierung mit dem Filiform-Test nicht die erwartete Zuverlässigkeit ergab, während der Salzsprüh-Kondenswasser-Wechseltest bei den erfindungsgemäß beschichteten Proben teilweise auch bessere Ergebnisse als bei der nickel-haltigen Phosphatierung erbrachte.

Insgesamt wurde mit den Prüfungen der Tabelle 2 und der Tabelle 3 die Qualität der Nickel-reichen Phosphatierungen erreicht.

Außerdem ergab sich, daß das Schichtgewicht der erfindungsgemäß beschichteten HDG-Bleche ein nahezu konstantes Schichtgewicht im Bereich von 2,0 bis 2,1 g/cm² bei einem Mangan-Gehalt im Bereich von 1 bis 2,5 g/L bzw. von ziemlich genau 1,0 g/cm² bei einem Kupfer-Gehalt im Bereich von 5 bis 20 mg/L.

Bei der Vorphosphatierung wurden einerseits Zusammensetzungen mit einer Nitrat-Beschleunigung (B 21 - B 23), andererseits mit einer Nitrat-freien Peroxid-Beschleunigung (B 24 - B 26) erfolgreich ausprobiert und mit einer Nickel-freien Vorphosphatierung bzw. mit einer sehr wenig Kupfer enthaltenden bzw. Nickel-reichen Phosphatierung (VB 26 bzw. VB 27) in Beziehung gesetzt. Außerdem wurden Kupfer-freie und Kupfer-reichere Phosphatierungslösungen (VB 21 - VB 24) im Vergleich zu den erfindungsgemäßen Phosphatierungslösungen mit einem gewissen Kupfer-Gehalt eingesetzt. Bei 5 Versuchen wurde Flußsäure zugegeben. Die Probebleche wurden wie für die Versuche mit den Beispielen B 1 bis B 20 entsprechend den Schritten a) bis c) behandelt, jedoch wurde der Titan-haltige Aktivator aufgespritzt. Es wurden Schichtgewichte im Bereich von 1,5 bis 1,6 g/m² eingestellt.

**Tabelle 4: Zusammensetzung der Vorphosphatierungslösungen in g/L bzw. Punkten der Freien Säure (FS) bzw. Gesamten Säure nach Fischer (GSF)**

| | Zn | Mn | Ni | Cu | F*_{gesamt}* | PO₄ | NH₄ | NO₃* | H₂O₂ | FS | GSF |
|---|---|---|---|---|---|---|---|---|---|---|---|
| B 21 | 1,74 | 2,15 | - | 0,010 | - | 20 | - | 15,5 | - | 2,6 | 19,2 |
| B 22 | 1,74 | 2,15 | - | 0,020 | - | 20 | - | 15,5 | - | 2,6 | 19,2 |
| B 23 | 1,74 | 2,15 | - | 0,040 | - | 20 | - | 15,5 | - | 2,6 | 19,2 |
| B 24 | 1,74 | 2,15 | - | 0,010 | 0,9 | 20 | - | - | 1,0 | 3,4 | 19,2 |
| B 25 | 1,74 | 2,15 | - | 0,020 | 0,9 | 20 | - | - | 1,0 | 3,4 | 19,2 |
| B 26 | 1,74 | 2,15 | - | 0,040 | 0,9 | 20 | - | - | 1,0 | 3,4 | 19,2 |
| VB 21 | 1,74 | 2,15 | - | - | - | 20 | - | 15,5 | - | 2,6 | 19,2 |
| VB 22 | 1,74 | 2,15 | - | 0,060 | - | 20 | - | 15,5 | - | 2,6 | 19,2 |
| VB 23 | 1,74 | 2,15 | - | - | 0,9 | 20 | - | - | 1,0 | 3,4 | 19,2 |
| VB 24 | 1,74 | 2,15 | - | 0,060 | 0,9 | 20 | - | - | 1,0 | 3,4 | 19,2 |
| VB 25 | 1,70 | 2,0 | 1,3 | - | - | 18,0 | - | 12,0 | - | 2,9 | 19,0 |
| VB 26 | 1,95 | 0,8 | - | 0,003 | 3,0** | 18,5 | 0,9 | 3,2 | 1,2^{#} | 3,0 | 19,4 |
| VB 27 | 0,7 | 1,0 | 1,0 | - | - | 17,5 | - | 2,1 | - | 0,8 | 18,0 |

| | | | | | | | | | | | |
|---|---|---|---|---|---|---|---|---|---|---|---|
| * als Zugabemenge ** als SiF₆ ^{#}als HA. | | | | | | | | | | | |

Beim Vergleichsbeispiel 25 wurde eine Nickel-haltige Vorphosphatierung mit einem Schichtgewicht von etwa 1,5 g/m² aufgebracht, während bei den Vergleichsbeispielen 26 und 27 Phosphatschichten mit einem Schichtgewicht von etwa 3 g/m² aufgebracht wurden. Die Vergleichsbeispiele wurden wie die erfindungsgemäßen Vorphosphatierungen der erfindungsgemäßen Beispiele B 21 bis B 26 (ohne Nachphosphatierung) mit einem Automobil-Lackaufbau nach BMW lackiert und geprüft. Zusätzlich enthielten die Bäder einen geringen bis gewissen Natrium-Gehalt. Durch die hohen Nitrat-Gehalte wurde ein vergleichsweise geringer Gehalt an Nitrit erzeugt, der stark beschleunigend wirkte.

Tabelle 5 Ergebnisse der Korrosionsprüfungen an elektrolytisch verzinkten Stahl-Oberflächen an erfindungsgemäß (B) beschichteten bzw. in den Vergleichsbeispielen (VB) gewonnenen Beschichtungen durch
1. Lackhaftungs-Test durch Gitterschnitt-Prüfung nach BMW-Test N 600 87.0 nach 40 h Lagerung in 5 %-iger NaCl-Lösung bei 40 °C,
2. Lackhaftungs-Test durch Gitterschnitt-Schwitzwasser-Prüfung nach DIN/EN ISO 2409 nach 240 h Lagerung in Schwitzwasser,
3. Korrosions-Wechseltest nach General Motors GM-SCAB-Test 95-11 über 40 Runden bzw.
4. Korrosions-Test durch Freibewitterung mit NaCl-Beschleunigung nach VDA 621-414.

| | Gitterschnitt-Prüfung nach BMW | Gitterschnitt-Schwitzwasser-Prüfung nach DIN EN ISO 2409 | GM-SCAB-Test 95-11 | Freibewitterungs-Test nach VDA 621-414 |
|---|---|---|---|---|
| | Gt-Note | Gt-Note | mm Unterwanderung | mm Unterwanderung |
| B 21 | 3,0 | 2,0 | 1 | 0,3 |
| B 22 | 1,0 | 1,0 | 1 | 0,3 |
| B 23 | 1,0 | 1,0 | 1 | 0,3 |
| B 24 | - | 2,5 | 1,5 | - |
| B 25 | - | 2,0 | 1 | - |
| B 26 | - | 2,0 | 1 | - |
| VB 21 | 5,0 | 5,0 | 3 | 0,8 |
| VB 22 | 4,5 | 4,0 | 2 | 0,6 |
| VB 23 | - | 4,5 | 2 | - |
| VB 24 | - | 4,0 | 2 | - |
| VB 25 | 2,0 | 1,5 | 1 | 0,3 |
| VB 26 | 2,0 | - | 1 | 0,3 |
| VB 27 | 1,5 | 1,0 | 1 | 0,3 |

Während bei den beiden Gitterschnitt-Verfahren Gitterschnitt-Noten von 0 bis 5 vergeben werden können, von denen 0 die beste ist, wird bei den Korrosionstests die korrosive Unterwanderung des Lackes ausgehend von einem Ritz in mm auf Grundmetall angegeben. Die Ergebnisse sind bei allen Prüfungen Mittelwerte über jeweils mehrere geprüfte Bleche.

Bei diesen Prüfungen ergab sich, daß die erfindungsgemäß beschichteten Bleche in etwa die gleiche Qualität wie Bleche mit Nickel-reichen Phosphatbeschichtungen haben.

## Patentansprüche

1. Verfahren zur Beschichtung von metallischen Oberflächen durch Mangan-Zink-Phosphatieren mit einer ersten wässerigen Phosphatierungslösung (Vorphosphatieren), bei dem der ersten Phosphatierungslösung kein Nickel absichtlich zugesetzt wird und die erste Phosphatierungslösung folgende Gehalte aufweist.
Zink im Bereich von 1,3 bis 2,3 g/L,
Mangan im Bereich von 1,7 bis 2,6 g/L,
Zink : Mangan - Gewichtsverhältnis im Bereich von 0,5 : 1 bis 0,95 : 1,
Phosphat berechnet als PO₄ im Bereich von 10 bis 20 g/L,
Zink : Phosphat - Gewichtsverhältnis im Bereich von 0,06 bis 0,23,
Kupfer im Bereich von 0,008 bis 0,048 g/L,
Gesamtgehalt an Fluorid als freies Fluorid, als gebundenes Fluorid oder/und als wenigstens ein Komplexfluorid im Bereich von 0 bis 6 g/L, berechnet als F, wobei das Komplexfluorid SiF₆ einen Gehalt im Bereich von 0 bis 4,5 g/L aufweist, berechnet als SiF₆, und
Nitrat im Bereich von 0 bis zu 30 g/L oder/und
wenigstens einen anderen Beschleuniger ausgewählt aus der Gruppe von Nitrit bzw. Verbindungen auf Basis von Hydroxylamin oder/und Nitroguanidin im Bereich jeweils von 0,01 bis 2 g/L bzw. von Peroxid im Bereich von 0,01 bis 3 g/L,
wobei die vorphosphatierten Substrate geschweißt, verklebt oder/und umgeformt werden und
diese danach erneut phosphatiert werden (Nachphosphatieren), wobei zumindest teilweise vorphosphatierte, ggfs. zumindest teilweise umgeformte, ggfs. zumindest teilweise geschweißte metallische Substrate nachphosphatiert werden durch Beschichten mit einer zweiten wässerigen Phosphatierungslösung,
wobei der zweiten Phosphatierungslösung kein Nickel absichtlich zugesetzt wird oder nur mit einem Nickel-Gehalt von bis zu 0,3 g/L gearbeitet wird,
wobei die zweite Phosphatierungslösung folgende Gehalte aufweist:
Zink im Bereich von 0,05 bis 5 g/L und
Mangan im Bereich von 0,075 bis 5,2 g/L.

2. Beschichtungsverfahren nach Anspruch 1, **dadurch gekennzeichnet, daß** die erste Phosphatierungslösung einen Gehalt an Silber im Bereich von 0,0001 bis 0,05 g/L aufweist.

3. Beschichtungsverfahren nach einem der vorstehenden Ansprüche, **dadurch gekennzeichnet, daß** die erste Phosphatierungslösung einen Gehalt an Natrium im Bereich von 0,01 bis 10 g/L oder/und einen Gehalt an Kalium im Bereich von 0,01 bis 10 g/L aufweist.

4. Beschichtungsverfahren nach einem der vorstehenden Ansprüche, **dadurch gekennzeichnet, daß** die erste Phosphatierungslösung einen Gehalt an Chlorid im Bereich von 0,01 bis 6 g/L oder/und einen Gehalt an Chlorat im Bereich von 0,01 bis 5 g/L aufweist.

5. Beschichtungsverfahren nach einem der vorstehenden Ansprüche, **dadurch gekennzeichnet, daß** die erste Phosphatierungslösung einen Gehalt an freiem Fluorid im Bereich von 0,001 bis 0,8 g/L aufweist.

6. Beschichtungsverfahren nach einem der vorstehenden Ansprüche, **dadurch gekennzeichnet, daß** die erste Phosphatierungslösung einen Gehalt am gesamten Fluorid im Bereich von 0,01 bis 5 g/L aufweist.

7. Beschichtungsverfahren nach einem der vorstehenden Ansprüche, **dadurch gekennzeichnet, daß** die metallischen Substrate in einer Zeit bis zu 20 Minuten mit der ersten Phosphatierungslösung beschichtet werden.

8. Beschichtungsverfahren nach einem der vorstehenden Ansprüche, **dadurch gekennzeichnet, daß** die Temperatur der ersten Phosphatierungslösung bei der Beschichtung im Bereich von 10 bis 72 °C liegt.

9. Beschichtungsverfahren nach einem der vorstehenden Ansprüche, **dadurch gekennzeichnet, daß** bei der ersten Phosphatierungslösung die Freie Säure 0,1 bis 10 Punkte beträgt, die Gesamtsäure nach Fischer 5 bis 50 Punkte beträgt und das Verhältnis der Gesamtsäure nach Fischer zur Freien Säure im Bereich von 0,01 bis 0,7 liegt.

10. Beschichtungsverfahren nach einem der vorstehenden Ansprüche, **dadurch gekennzeichnet, daß** der pH-Wert der ersten Phosphatierungslösung im Bereich von 1 bis 4 liegt.

11. Beschichtungsverfahren nach einem der vorstehenden Ansprüche, **dadurch gekennzeichnet, daß** die erste Phosphatierungslösung auf die Oberfläche der Substrate durch Aufrakeln, Fluten, Spritzen, Sprühen, Streichen, Tauchen, Vernebeln, Walzen, wobei einzelne Prozeßschritte miteinander kombiniert sein können, und ggfs. nachträgliches Abquetschen aufgebracht wird.

12. Beschichtungsverfahren nach einem der vorstehenden Ansprüche, **dadurch gekennzeichnet, daß** mit der ersten Phosphatierungslösung Substrate mit einer vorwiegend Aluminium, Eisen, Kupfer, Magnesium, Zinn oder Zink enthaltenden metallischen Oberfläche beschichtet werden, insbesondere Oberflächen von mindestens einem der Werkstoffe auf Basis Aluminium, Eisen, Stahl, Zink oder/und Legierungen mit einem Gehalt an Aluminium, Eisen, Kupfer, Magnesium, Zinn bzw. Zink.

13. Beschichtungsverfahren nach einem der vorstehenden Ansprüche, **dadurch gekennzeichnet, daß** mit der ersten Phosphatierungslösung eine Phosphatbeschichtung abgeschieden wird, die ein Schichtgewicht im Bereich von 0,2 bis 6. g/m² aufweist.

14. Beschichtungsverfahren nach einem der vorstehenden Ansprüche, **dadurch gekennzeichnet, daß** die metallischen Oberflächen vor dem Vorphosphatieren gereinigt, gebeizt, gespült oder/und aktiviert werden.

15. Beschichtungsverfahren nach einem der vorstehenden Ansprüche, **dadurch gekennzeichnet, daß** die metallischen Oberflächen direkt vor dem Vorphosphatieren verzinkt werden.

16. Beschichtungsverfahren nach einem der vorstehenden Ansprüche, **dadurch gekennzeichnet, daß** die vorphosphatierten Substrate mindestens einmal gespült und ggfs. zwischen zwei Spülvorgängen mit einer Nachspüllösung zur zusätzlichen Passivierung behandelt werden.

17. Beschichtungsverfahren nach einem der vorstehenden Ansprüche, **dadurch gekennzeichnet, daß** die mit einer ersten oder/und zweiten Phosphatschicht versehenen Metallteile mit einem Lack, mit einer andersartigen organischen Beschichtung, mit einer Folie oder/und mit einer Klebstoffschicht beschichtet und ggf. umgeformt werden, wobei die derart beschichteten Metallteile zusätzlich mit anderen Teilen zusammengeklebt, zusammengeschweißt oder/und anderweitig miteinander verbunden werden können.

18. Verwendung der nach dem Verfahren gemäß mindestens einem der Ansprüche 1 bis 17 beschichteten Metallteile als endphosphatierte Metallteile, die ggf. noch nachträglich lackiert, andersartig organisch oder/und mit einer Folie beschichtet, mit einer Klebstoffschicht beschichtet, umgeformt, montiert oder/und zusammengeschweißt werden.

19. Verwendung der nach dem Verfahren gemäß mindestens einem der Ansprüche 1 bis 17 beschichteten Substrate bei der Bandherstellung, für die Herstellung von Komponenten oder Karosserieteilen bzw, vormontierten Elementen in der Automobil- oder Luftfahrtindustrie, in der Bauindustrie, in der Möbelindustrie, für die Herstellung von Geräten und Anlagen, insbesondere Haushaltsgeräten, Meßgeräten, Kontrolleinrichtungen, Prüfeinrichtungen, Konstruktionselementen, Verkleidungen sowie von Kleinteilen; als Draht, Drahtwicklung, Drahtgeflecht, Blech, Verkleidung, Abschirmung, Karosserie oder Teil einer Karosserie, als Teil eines Fahrzeugs, Anhängers, Wohnmobils oder Flugkörpers, als elektronische oder mikroelektronische Komponente, als Abdeckung, Gehäuse, Lampe, Leuchte, Ampelelement, Möbelstück oder Möbelelement, Element eines Haushaltsgeräts, Gestell, Profil, Formteil komplizierter Geometrie, Leitplanken-, Heizkörper- oder Zaunelement, Stoßstange, Teil aus oder mit mindestens einem Rohr oder/und einem Profil, Fenster-, Tür- oder Fahrradrahmen oder als Kleinteil wie z.B. eine Schraube, Mutter, Flansch, Feder oder ein Brillengestell.

## Claims

1. A process for the coating of metallic surfaces by manganese-zinc phosphating with a first aqueous phosphating solution (prephosphating), in which no nickel is intentionally added to the first phosphating solution, and the first phosphating solution contains the following amounts:
zinc in the range from 1.3 to 2.3 g/l,
manganese in the range from 1.7 to 2.6 g/l,
zinc:manganese weight ratio in the range from 0.5:1 to 0.95:1,
phosphate calculated as PO₄ in the range from 10 to 20 g/l,
zinc:phosphate weight ratio in the range from 0.06 to 0.23,
copper in the range from 0.008 to 0.048 g/l,
total content of fluoride as free fluoride, as bound fluoride
and/or as at least one complex fluoride in the range from 0 to 6 g/l calculated as F, wherein the complex fluoride SiF₆ is contained in an amount in the range from 0 to 4.5 g/l, calculated as SiF₆, and
nitrate in the range from 0 to 30 g/l and/or
at least one further accelerator selected from the group comprising nitrite or compounds based on hydroxylamine and/or nitroguanidine, in each case in the range from 0.01 to 2 g/l, or peroxide in the range from 0.01 to 3 g/l,
wherein the prephosphated substrates are welded, bonded and/or formed/shaped and
these are then phosphated anew (post-phosphating),
wherein at least partially prephosphated, optionally at least partially formed/shaped, and optionally at least partially welded metallic substrates are post-phosphated by coating with a second aqueous phosphating solution,
wherein no nickel is intentionally added to the second phosphating solution or operations are carried out only with a nickel content of up to 0.3 g/l, wherein the second phosphating solution contains the following amounts:
zinc in the range from 0.05 to 5 g/l, and
manganese in the range from 0.075 to 5.2 g/l.

2. A coating process according to claim 1, **characterised in that** the first phosphating solution has a content of silver in the range from 0.0001 to 0.05 g/l.

3. A coating process according to one of the preceding claims, **characterised in that** the first phosphating solution has a content of sodium in the range from 0.01 to 10 g/l and/or a content of potassium in the range from 0.01 to 10 g/l.

4. A coating process according to one of the preceding claims, **characterised in that** the first phosphating solution has a chloride content in the range from 0.01 to 6 g/l and/or a chlorate content in the range from 0.01 to 5 g/l.

5. A coating process according to one of the preceding claims, **characterised in that** the first phosphating solution has a content of free fluoride in the range from 0.001 to 0.8 g/l.

6. A coating process according to one of the preceding claims, **characterised in that** the first phosphating solution has a total content of fluoride in the range from 0.01 to 5 g/l.

7. A coating process according to one of the preceding claims, **characterised in that** the metallic substrates are coated with the first phosphating solution for a time of up to 20 minutes.

8. A coating process according to one of the preceding claims, **characterised in that** the temperature of the first phosphating solution in the coating procedure is in the range from 10° to 72°C.

9. A coating process according to one of the preceding claims, **characterised in that** in the case of the first phosphating solution the free acid has a value of 0.1 to 10 points, the total acid according to Fischer has a value of 5 to 50 points, and the ratio of the total acid according to Fischer to free acid is in the range from 0.01 to 0.7.

10. A coating process according to one of the preceding claims, **characterised in that** the pH of the first phosphating solution is in the range from 1 to 4.

11. A coating process according to one of the preceding claims, **characterised in that** the first phosphating solution is applied to the surface of the substrates by knife coating, flow coating, spraying, sprinkling, brushing, dipping, nebulising or rolling, wherein individual process steps may be combined with one another, the application optionally being followed by squeezing off.

12. A coating process according to one of the preceding claims, **characterised in that** substrates with a metallic surface predominantly containing aluminium, iron, copper, magnesium, tin or zinc, in particular surfaces of at least one of the materials based on aluminium, iron, steel, zinc and/or alloys with a content of aluminium, iron, copper, magnesium, tin or zinc, are coated with the first phosphating solution.

13. A coating process according to one of the preceding claims, **characterised in that** a phosphate coating that has a layer weight in the range from 0.2 to 6 g/m² is deposited from the first phosphating solution.

14. A coating process according to one of the preceding claims, **characterised in that** the metallic surfaces are cleaned, pickled, rinsed and/or activated before the prephosphating.

15. A coating process according to one of the preceding claims, **characterised in that** the metallic surfaces are galvanised directly before the prephosphating.

16. A coating process according to one of the preceding claims, **characterised in that** the prephosphated substrates are rinsed at least once and are optionally treated between two rinse procedures with a post-rinse solution to provide additional passivation.

17. A coating process according to one of the preceding claims, **characterised in that** the metal parts provided with a first and/or second phosphate layer are coated with a paint, with another type of organic coating, with a film and/or with an adhesive layer and are optionally formed/shaped, wherein the metal parts coated in this way may in addition be bonded or welded to other parts and/or joined together in some other way.

18. Use of the metal parts coated by the process according to at least one of claims 1 to 17 as end-phosphated metal parts that are optionally also subsequently painted, organically coated in some other way and/or coated with a film, are coated with an adhesive layer, formed/shaped, assembled and/or welded together.

19. Use of the substrates coated by the process according to at least one of claims 1 to 17 in the production of strip material, for the production of components or car body parts or preassembled elements in the automobile or aerospace industry, in the building and construction industry, in the furniture industry, for the production of instruments and units, in particular domestic appliances, measuring instruments, control devices, testing devices, structural components, claddings/linings as well as small parts; as wire, wire coiling, wire mesh, metal sheeting, cladding/lining, screening, car bodies or parts of car bodies, parts of vehicles, trailers, mobile homes or missiles, as electronic or microelectronic components, as coverings, housings, lamps, lights, hanging light units, items of furniture or furniture parts, components of domestic appliances, frames, profiled sections, moulded parts of complicated geometry, beam barrier, radiator or fence parts, automobile bumpers, parts of or with at least one pipe and/or a profiled section, window, door or bicycle frames, or as small parts such as for example screws, nuts, flanges, springs or spectacle frames.

## Revendications

1. Procédé pour le revêtement d'une surface métallique par phosphatation au zinc-manganèse avec une première solution aqueuse de phosphatation (préphosphatation), dans lequel du nickel n'est pas intentionnellement ajouté à la première solution et la première solution de phosphatation présente les teneurs suivantes :
en zinc dans la plage de 1,3 à 2,3 g/l,
en manganèse dans la plage de 1,7 à 2,6 g/l,
en un rapport pondéral zinc/manganèse dans la plage de 0,5:1 à 0,95:1,
en phosphate, calculé en tant que PO₄, dans la plage de 10 à 20 g/l,
en un rapport pondéral zinc/phosphate dans la plage de 0,06 à 0,23,
en cuivre dans la plage de 0,008 à 0,48 g/l,
une teneur totale en fluor, sous forme de fluor libre, sous forme de fluor lié et/ou sou forme d'au moins un fluorure complexe, dans la plage de 0 à 6 g/l, calculé en tant que F, le fluorure complexe SiF₆ étant à une concentration dans la plage de 0 à 4,5 g/l, calculé en tant que SiF₆, et
en nitrate dans la plage de 0 à 30 g/l et/ou
au moins en un autre accélérateur choisi dans le groupe constitué par un nitrite et des composés à base d'hydroxylamine et/ou de nitroguanidine, chacun dans la plage de 0,01 à 2 g/l ou un peroxyde dans la plage de 0,01 à 3 g/l, les substrats préphosphatés étant soudés, collés et/ou mis en forme et
ceux-ci étant ensuite à nouveau phosphatés (post-phosphatation), les substrats métalliques au moins partiellement phosphatés, éventuellement au moins partiellement mis en forme, éventuellement au moins partiellement soudés étant post-phosphatés par revêtement avec une deuxième solution aqueuse de phosphatation,
aucun nickel n'étant intentionnellement ajouté à la deuxième solution de phosphatation ou celle-ci n'étant traitée qu'avec une teneur en nickel de jusqu'à 0,3 g/l,
la deuxième solution de phosphatation présentant les teneurs suivantes :
en zinc dans la plage de 0,05 à 5 g/l et
en manganèse dans la plage de 0,075 à 5,2 g/l.

2. Procédé de revêtement selon la revendication 1, **caractérisé en ce que** la première solution de phosphatation présente une teneur en argent dans la plage de 0,0001 à 0,05 g/l.

3. Procédé de revêtement selon l'une quelconque des revendications précédentes, **caractérisé en ce que** la première solution de phosphatation présente une teneur en sodium dans la plage de 0,01 à 10 g/l et/ou une teneur en potassium dans la plage de 0,01 à 10 g/l.

4. Procédé de revêtement selon l'une quelconque des revendications précédentes, **caractérisé en ce que** la première solution de phosphatation présente une teneur en chlorure dans la plage de 0,01 à 6 g/l et/ou une teneur en chlorate dans la plage de 0,01 à 5 g/l.

5. Procédé de revêtement selon l'une quelconque des revendications précédentes, **caractérisé en ce que** la première solution de phosphatation présente une teneur en fluorure libre dans la plage de 0,001 à 0,8 g/l.

6. Procédé de revêtement selon l'une quelconque des revendications précédentes, **caractérisé en ce que** la première solution de phosphatation présente une teneur en fluorure total dans la plage de 0,01 à 5 g/l.

7. Procédé de revêtement selon l'une quelconque des revendications précédentes, **caractérisé en ce que** les substrats métalliques sont revêtus avec la première solution de phosphatation en un temps de jusqu'à 20 minutes.

8. Procédé de revêtement selon l'une quelconque des revendications précédentes, **caractérisé en ce que** la température de la première solution de phosphatation lors de l'enduction est dans la plage de 10 à 72 °C.

9. Procédé de revêtement selon l'une quelconque des revendications précédentes, **caractérisé en ce que** dans la première solution de phosphatation l'acide libre vaut de 0,1 à 10 points, l'acide total selon Fischer vaut de 5 à 50 points et le rapport de l'acide total selon Fischer à l'acide libre se situe dans la plage de 0,01 à 0,7.

10. Procédé de revêtement selon l'une quelconque des revendications précédentes, **caractérisé en ce que** le pH de la première solution de phosphatation se situe dans l'intervalle allant de 1 à 4.

11. Procédé de revêtement selon l'une quelconque des revendications précédentes, **caractérisé en ce que** la première solution de phosphatation est appliquée sur la surface des substrats par enduction à la racle, ruissellement, pistolage, pulvérisation, enduction au pinceau, trempage, nébulisation, application au rouleau, des étapes individuelles de processus pouvant être combinées, et éventuellement expression subséquente.

12. Procédé de revêtement selon l'une quelconque des revendications précédentes, **caractérisé en ce qu'**on revêt avec la première solution de phosphatation des substrats comportant une surface métallique contenant essentiellement de l'aluminium, du fer, du cuivre, du magnésium, de l'étain ou du zinc, en particulier des surfaces d'au moins l'un des matériaux à base d'aluminium, de fer, d'acier, de zinc et/ou d'alliages ayant une teneur en aluminium, fer, cuivre, magnésium, étain ou zinc.

13. Procédé de revêtement selon l'une quelconque des revendications précédentes, **caractérisé en ce qu'**avec la première solution de phosphatation est déposé un revêtement de phosphate qui présente un poids de couche dans la plage de 0,2 à 6 g/m².

14. Procédé de revêtement selon l'une quelconque des revendications précédentes, **caractérisé en ce que** les surfaces métalliques sont nettoyées, décapées, rincées et/ou activées.

15. Procédé de revêtement selon l'une quelconque des revendications précédentes, **caractérisé en ce que** les surfaces métalliques sont directement galvanisées avant la préphosphatation.

16. Procédé de revêtement selon l'une quelconque des revendications précédentes, **caractérisé en ce que** les substrats préphosphatés sont rincés au moins une fois et, éventuellement entre deux opérations de rinçage, traités par une solution de post-rinçage pour la passivation supplémentaire.

17. Procédé de revêtement selon l'une quelconque des revendications précédentes, **caractérisé en ce que** les pièces métalliques munies d'une première et/ou d'une deuxième ouche de phosphate sont revêtues avec une peinture, avec un autre revêtement organique, avec un film et/ou avec une couche d'adhésif et éventuellement mises en forme, les pièces métalliques enduites de cette façon pouvant en outre être assemblées par collage avec d'autres pièces, soudées ensemble et/ou liées entre elles d'une autre façon.

18. Utilisation des pièces métalliques revêtues conformément au procédé selon au moins l'une des revendications 1 à 17, en tant que pièces métalliques à phosphatation finale, qui sont éventuellement encore ultérieurement peintes, revêtues d'un autre revêtement organique et/ou d'un film, revêtues d'une couche d'adhésif, mises en forme, montées et/ou soudées ensemble.

19. Utilisation des substrats revêtus conformément au procédé selon au moins l'une des revendications 1 à 17, dans la fabrication de rubans pour la fabrication de composants ou de pièces de carrosserie ou d'éléments pré-assemblés dans l'industrie de l'automobile ou de l'aéronautique, dans l'industrie du bâtiment, dans l'industrie du meuble, pour la fabrication d'appareils et d'unités, en particulier d'appareils domestiques, d'appareils de mesure, de dispositifs de régulation, de dispositifs d'essai, d'éléments de construction, de chemisages ainsi que de petits accessoires ; sous forme de fil, d'enroulement de fil, de treillis de fils, de tôle, de chemisage, de blindage, de carrosserie ou de partie d'une carrosserie, de partie d'un véhicule, d'une remorque, d'une caravane ou d'un engin volant, sous forme de composant électronique ou microélectronique, de couverture, de boîtier, de lampe, de luminaire, d'élément de signalisation, de pièce de meuble ou d'élément de meuble, d'élément d'un appareil domestique, de rayonnage, de profilé, de pièce moulée de géométrie compliquée, d'élément de rail de sécurité, de corps de chauffe ou de clôture, de pare-chocs, de pièce consistant en ou comportant au moins un tube et/ou un profilé, de châssis de fenêtre, de porte ou de cadre de bicyclette, ou sous forme de petit accessoire, comme par exemple une vis, un écrou, un collet, un ressort ou une monture de lunettes.
